# EUROPEAN PATENT APPLICATION

(11) **EP 4 804 678 A1**
(43) Date of publication of application: **09.09.2026**
(21) Application number: 23957071.6
(22) Date of filing: 31.10.2023
(51) Int. Cl.: H04W 72/0457

(54) **METHOD FOR TRANSMITTING CONFIGURATION INFORMATION, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN)
(74) Representative: RGTH
(86) International application number: PCT/CN2023/128082
(87) International publication number: WO 2025/091191

(57) **Abstract**

Provided are a method for transmitting configuration information, a terminal device, and a network device. The method comprises: the terminal device receiving first configuration information sent by the network device, the first configuration information being used to configure one or more of the following for a first bandwidth part (BWP): a first model; a first artificial intelligence (AI) function; a first AI characteristic. In the embodiments of the present application, the network device may configure first configuration information for a first BWP for a terminal device, the first configuration information being used to configure one or more of the following: the first model; the first artificial intelligence (AI) function; the first AI characteristic. Compared with conventional solutions, the solution of the network device performing unified configuration for the terminal device is beneficial for improving configuration accuracy.

## Description

### TECHNICAL FIELD

The present application relates to the field of communication, and more particularly, to a method for transmitting configuration information, a terminal device, and a network device.

### BACKGROUND

In some known technologies, a network device configures a terminal device with configuration information related to artificial intelligence (AI) and/or machine learning (ML). In traditional configuration processes, the network device adopts a manner of unified configuration. That is, for all terminal devices within the coverage range of the network device, the network device transmits uniformly configured configuration information. However, this manner of unified configuration may result in some terminal devices not being suitable for the corresponding configuration, reducing the accuracy of the configuration.

### SUMMARY

The present application provides a method for transmitting configuration information, a terminal device, and a network device. The following describes various aspects of the present application.

In a first aspect, a method for transmitting configuration information is provided, which includes: receiving, by a terminal device, first configuration information transmitted by a network device, where the first configuration information is used to configure one or more of the following for a first bandwidth part (BWP): a first model; a first artificial intelligence (AI) functionality; or a first AI feature.

In a second aspect, a method for transmitting configuration information is provided, which includes: transmitting, by a network device, first configuration information to a terminal device, where the first configuration information is used to configure one or more of the following for a first BWP: a first model; a first AI functionality; or a first AI feature.

In a third aspect, a terminal device is provided, which includes: a receiving unit, configured to receive first configuration information transmitted by a network device, where the first configuration information is used to configure one or more of the following for a first BWP: a first model; a first AI functionality; or a first AI feature.

In a fourth aspect, a network device is provided, which includes: a transmitting unit, configured to transmit first configuration information to a terminal device, where the first configuration information is used to configure one or more of the following for a first BWP: a first model; a first AI functionality; or a first AI feature.

In a fifth aspect, a terminal device is provided, which includes a processor, a memory, and a communication interface. The memory is configured to store one or more computer programs, and the processor is configured to invoke the computer program in the memory, to enable the terminal device to perform some or all of the steps in the method of the first aspect.

In a sixth aspect, a network device is provided, which includes a processor, a memory, and a transceiver. The memory is configured to store one or more computer programs, and the processor is configured to invoke the computer program in the memory, to enable the network device to perform some or all of the steps in the method of the second aspect.

In a seventh aspect, the embodiments of the present application provide a communication system, which includes the terminal device and/or network device. In another possible design, the system may further include other devices that interact with the terminal device or the network device in the solutions provided by the embodiments of the present application.

In an eighth aspect, the embodiments of the present application provide a computer-readable storage medium, where the computer-readable storage medium stores a computer program, and the computer program enables a communication device (e.g., a terminal device or a network device) to perform some or all of the steps in the methods of the aforementioned aspects.

In a ninth aspect, the embodiments of the present application provide a computer program product, where the computer program product includes a non-transitory computer-readable storage medium storing a computer program, and the computer program is operable to enable a communication device (e.g., a terminal device or a network device) to perform some or all of the steps in the methods of the aforementioned aspects. In some implementations, the computer program product may be a software installation package.

In a tenth aspect, the embodiments of the present application provide a chip. The chip includes a memory and a processor. The processor can invoke a computer program from the memory and execute the computer program, to implement some or all steps described in the methods of the aforementioned aspects.

In the embodiments of the present application, the network device may configure first configuration information for the first BWP for the terminal device, where the first configuration information is used to configure one or more of: the first model; the first AI functionality; or the first AI feature. Compared with the traditional solution where the network device performs the unified configuration for the terminal device, this solution helps improve the accuracy of the configuration.

### BRIEF DESCRIPTION OF THE DRAWINGS

FIG. 1 is a wireless communication system 100 to which embodiments of the present application are applied.
FIG. 2 is a schematic diagram of a neural network applicable to the embodiments of the present application.
FIG. 3 is a schematic diagram of a convolutional neural network (CNN) applicable to the embodiments of the present application.
FIG. 4 is a schematic diagram of an AI model-based channel state information (CSI) feedback system applicable to the embodiments of the present application.
FIG. 5 is a schematic diagram of an AI model-based positioning solution applicable to the embodiments of the present application.
FIG. 6 is a schematic diagram of AI model-based beam management applicable to the embodiments of the present application.
FIG. 7(a) is a schematic diagram of a model switching process applicable to the embodiments of the present application.
FIG. 7(b) is a schematic diagram of an AI functionality switching process applicable to the embodiments of the present application.
FIG. 7(c) is a schematic diagram of an AI feature switching process applicable to the embodiments of the present application.
FIG. 8 is a schematic flowchart of a method for transmitting configuration information according to the embodiments of the present application.
FIG. 9 is a schematic diagram of four types of BWP according to the embodiments of the present application.
FIG. 10 is a schematic diagram of a BWP switching process from BWP1 to BWP2 according to the embodiments of the present application.
FIG. 11 is a schematic diagram of a BWP switching process from BWP1 to BWP2 according to another embodiment of the present application.
FIG. 12 is a schematic diagram of a BWP switching process from BWP2 to BWP1 according to another embodiment of this application.
FIG. 13 is a schematic diagram of a BWP switching process from BWP2 to BWP1 according to another embodiment of the present application.
FIG. 14 is a schematic diagram of a terminal device according to the embodiments of the present application.
FIG. 15 is a schematic diagram of a network device according to the embodiments of the present application.
FIG. 16 is a schematic structural diagram of a communication apparatus according to the embodiments of the present application.

### DETAILED DESCRIPTION

Technical solutions in the present application will be described below with reference to the accompanying drawings.

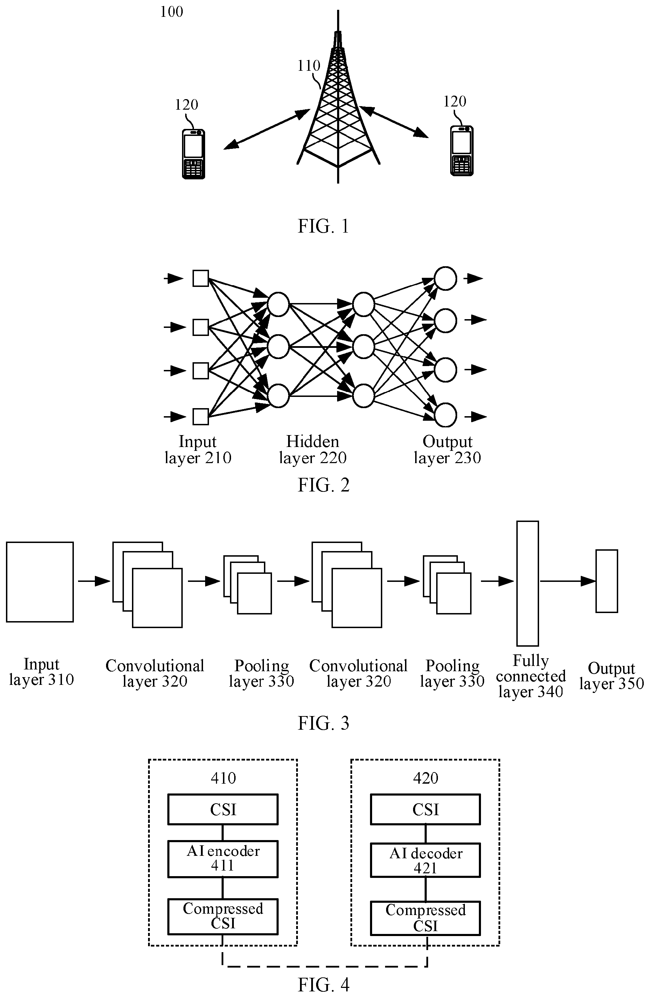

FIG. 1 is a wireless communication system 100 to which embodiments of the present application are applied. The wireless communication system 100 may include a network device 110 and terminal devices 120. The network device 110 may be a device that communicates with the terminal device 120. The network device 110 may provide communication coverage for a specific geographic area and may communicate with the terminal devices 120 located within the coverage area.

FIG. 1 exemplarily shows one network device and two terminals. Optionally, the wireless communication system 100 may include multiple network devices, and within the coverage range of each network device, there may be other numbers of terminal devices, which is not limited in the embodiments of the present application.

Optionally, the wireless communication system 100 may further include other network entities such as a network controller and a mobility management entity, which is not limited in the embodiments of the present application.

It should be understood that the technical solutions of the embodiments of the present application may be applied to various communication systems, such as a 5th generation (5G) system or new radio (NR), a long-term evolution (LTE) system, an LTE frequency division duplex (FDD) system, an LTE time division duplex (TDD) system, etc. The technical solutions provided in the present application may also be applied to future communication systems, such as a 6th generation mobile communication system, a satellite communication system, etc.

In the embodiments of the present application, the terminal device may also be referred to as user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent, or a user apparatus. In the embodiments of the present application, the terminal device may refer to a device that provides voice and/or data connectivity to a user, and may be used to connect people, objects and machines, such as a handheld device or in-vehicle device with a wireless connection function. In the embodiments of the present application, the terminal device may be a mobile phone, a tablet computer (Pad), a laptop computer, a handheld computer, a mobile Internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE may act as a base station. For example, the UE may act as a scheduling entity that provides sidelink signals between UEs in scenarios such as vehicle-to-everything (V2X) or device-to-device (D2D). For example, a cellular phone and a car may communicate with each other by using sidelink signals. A cellular phone and a smart home device may communicate with each other without relaying communication signals via a base station.

In the embodiments of the present application, the network device may be a device used for communicating with a terminal device, and the network device may also be referred to as an access network device or a radio access network device, such as a base station. In the embodiments of the present application, the network device may refer to a radio access network (RAN) node (or device) that connects the terminal device to a wireless network. The base station may broadly cover the following various names, or may be replaced with the following names, such as: a NodeB, an evolved base station (evolved NodeB, eNB), a next generation base station (evolved NodeB, gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a radio node, an access point (AP), a transmission node, a transceiver node, a baseband unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node, or similar entities, or a combination thereof. The base station may also refer to a communication module, a modem, or a chip configured to be set in the aforementioned devices or apparatuses. The base station may also be a mobile switching center, a device that performs functions of the base station in device-to-device (D2D) communication, vehicle-to-everything (V2X) communication, and machine-to-machine (M2M) communication, a network-side device in a 6G network, and a device that performs functions of the base station in a future communication system, etc. The base station may support networks with the same or different access technologies. The specific technologies used by the network device and the specific device forms of the network device are not limited in the embodiments of the present application.

The base station may be immobile or mobile. For example, a helicopter or a drone may be configured to act as a mobile base station, and one or more cells may move according to the location of the mobile base station. In other examples, the helicopter or the drone may be configured to act as a device communicating with another base station.

In some deployments, the network device in the embodiments of the present application may refer to a CU or a DU, or the network device may include both a CU and a DU. The gNB may also include an AAU.

The network device and the terminal device may be deployed on land, which includes indoor or outdoor, in handheld or in-vehicle; may also be deployed on water; may be deployed on an airplane, balloons and satellite in the air. The scenarios in which the network device and terminal device are located are not limited in the embodiments of the present application.

It should be understood that all or part of the functions of the communication device in the present application may also be implemented by software running on hardware or by virtualized functions instantiated on a platform (e.g., a cloud platform).

With the development of AI technology, AI models are being increasingly introduced into communication processes. In some scenarios, an ML-based AI model may also be referred to as an "ML model." For ease of understanding, the following sections introduce the AI models used in communication processes in combination with FIGS. 2 and 3.

### AI model

In recent years, artificial intelligence research represented by neural networks has achieved significant results in many fields and will continue to play an important role in people's production and daily lives for a long time to come. A neural network can be understood as a computational model composed of multiple interconnected neuron nodes, where the connections between nodes represent weighted values from input signals to output signals, commonly referred to as weights. Each node performs a weighted summation of different input signals and outputs through a specific activation function.

Common neural networks include a CNN, a recurrent neural network (RNN), a deep neural network (DNN), etc.

The neural network applicable to the embodiments of the present application is described below in combination with FIG. 2. The neural network shown in FIG. 2 may be divided into three categories based on the locations of different layers: an input layer 210, a hidden layer 220, and an output layer 230. Generally speaking, the first layer is the input layer 210, the last layer is the output layer 230, and the intermediate layers between the first layer and the last layer are all hidden layers 220.

The input layer 210 is used to input data, where the input data, for example, may be a received signal received by a receiver. The hidden layer 220 is used to process the input data, such as decompressing the received signal. The output layer 230 is used to output the processed output data, such as output the decompressed signal.

As shown in FIG. 2, the neural network includes multiple layers, and each layer includes multiple neurons. The neurons between layers may be fully connected or partially connected. For connected neurons, the output of a neuron in the previous layer may serve as the input for a neuron in the next layer.

With the continuous development of neural network research, deep learning algorithms for neural networks have been proposed in recent years, introducing more hidden layers into neural networks to form DNNs. More hidden layers enable the DNN to better model complex scenarios in the real world. Theoretically speaking, models with more parameters have higher complexity and greater "capacity", meaning they may accomplish more complex learning tasks. This type of neural network model is widely used in pattern recognition, signal processing, optimization, anomaly detection, and other areas.

The CNN is a deep neural network with a convolutional structure, and its structure is shown in FIG. 3, which may include an input layer 310, a convolutional layer 320, a pooling layer 330, a fully connected layer 340, and an output layer 350.

Each convolutional layer 320 may include many convolution operators, the convolution operator is also known as a kernel, whose function may be designated as a filter for extracting specific information from the input signal. The convolution operator may essentially be a weight matrix, which is usually predefined.

The weight values in these weight matrices need to be obtained through extensive training in practical applications. The various weight matrices formed by the weight values obtained through training may extract information from the input signal, thereby helping the CNN make correct predictions.

When the CNN has multiple convolutional layers, the initial convolutional layers often extract more general features, and the general feature may also be referred to as a low-level feature. As the depth of the CNN increases, the later convolutional layers extract increasingly complex features.

The pooling layer 330, as it often needs to reduce the number of training parameters, is typically introduced periodically after convolutional layers. For example, it may be one pooling layer following one convolutional layer as shown in FIG. 3, or multiple convolutional layers followed by one or more pooling layers. In signal processing, the sole purpose of the pooling layer is to reduce the spatial size of the extracted information.

The fully connected layer 340, after processing through the convolutional layer 320 and the pooling layer 330, the CNN is still insufficient to output the required information. As mentioned earlier, the convolutional layer 320 and the pooling layer 330 only extract features and reduce the parameters introduced by the input data. However, to generate the final output information (e.g., the bitstream of the original information transmitted by a transmitting end), the CNN also needs to utilize the fully connected layer 340. Typically, the fully connected layer 340 may include multiple hidden layers. The parameters contained in these multiple hidden layers may be obtained by performing pre-training based on relevant training data for specific task types. For example, the task type may include decoding data signals received by the receiver, or the task type may also include performing channel estimation based on pilot signals received by the receiver.

After the multiple hidden layers in the fully connected layer 340, the final layer of the entire CNN is the output layer 350, which is used to output results. Typically, this output layer 350 is equipped with a loss function (e.g., similar to a categorical cross-entropy loss function) to calculate prediction errors or to evaluate the degree of difference between the CNN model's output (also known as a predicted value) and the ideal result (also known as a true value).

To minimize the loss function, the CNN model needs to be trained. In some implementations, the backpropagation algorithm (BP) may be used to train the CNN model. The training process of the BP consists of forward propagation and backpropagation. During the forward propagation (as shown in FIG. 3, the propagation from 310 to 350 is the forward propagation), input data is fed into the aforementioned layers of the CNN model, processed layer by layer, and transmitted to the output layer. If the output result from the output layer differs significantly from the ideal result, minimizing the aforementioned loss function is taken as the optimization goal, and the process switches to the backpropagation (as shown in FIG. 3, the propagation from 350 to 310 is the backpropagation). The partial derivatives of the optimization goal with respect to the weights of each neuron are calculated layer by layer, forming the gradient of the optimization goal with respect to the weight vector, which serves as the basis for modifying the model weights. The training process of the CNN is completed during the weight modification process. When the aforementioned error reaches the expected value, the training process of the CNN ends.

It should be noted that the CNN shown in FIG. 3 is only an example of a convolutional neural network. In specific applications, the convolutional neural network may also exist in the form of other network models, which is not limited in the embodiments of the present application.

The purpose of RNNs is to process sequential data. In traditional neural network models (e.g., CNN models), the flow is from the input layer to the hidden layer and then to the output layer, with full connections between layers and no connections between nodes within the same layer. However, such ordinary neural networks are ineffective for many problems. For example, to predict the next word in a sentence, the preceding words are generally needed because words in a sentence are not independent of each other. The RNNs are referred to as recurrent neural networks because the current output of a sequence is also related to previous outputs. The specific manifestation is that the network will remember the previous information and apply it to the current output calculation. That is, the nodes between the hidden layers are no longer unconnected but connected, and the input of the hidden layer includes not only the output of the input layer but also the output of the hidden layer at the previous moment. Theoretically, the RNNs may process sequence data of any length.

The training of the RNN is the same as the training of a traditional artificial neural network (ANN). It also uses the BP error backpropagation algorithm, but with one difference. If RNNs are unfolded into a network, the parameters W, U, and V are shared, whereas in traditional neural networks, they are not. Moreover, when using a gradient descent algorithm, the output of each step depends not only on the network of the current step but also on the states of the network of several previous steps. For example, when t=4, three more steps need to be passed backward, and various gradients need to be added to the subsequent three steps. This learning algorithm is referred to as a back propagation through time (BPTT) algorithm.

Since there are the artificial neural network and the convolutional neural network, why a recurrent neural network is required? The reason is simple: the fundamental assumption for both the convolutional neural network and the artificial neural network is that elements are independent of each other, and input and output are also independent, such as a cat and a dog. However, in the real world, many elements are interconnected, such as stock prices changing over time, or a person saying: "I love traveling, and my favorite place is Yunnan. I must visit __ when I get the chance." Here, when filling in the blank, people would naturally know it should be "Yunnan." This is because it is inferred from the context, but it is quite difficult for the machine to do this. Thus, there is the current recurrent neural network, whose essence is: to have the ability to remember like a human. Therefore, its output depends on both the current input and memory.

The above content introduced the AI model applicable to the embodiments of the present application in combination with FIGS. 2 to 3. The following content describes the communication process introducing the AI model in combination with FIGS. 4 to 6.

### CSI feedback system based on AI model

In a wireless communication system, the extraction and feedback of channel features are mainly implemented using codebook-based schemes. That is, after channel estimation is performed at the receiver, a precoding matrix that best matches the current channel is selected from a predefined precoding codebook according to certain optimization criteria based on the channel estimation results. Precoding matrix index (PMI) information is then fed back to the transmitter via an air interface feedback link for the transmitter to implement precoding. In some implementations, the receiver may also feed back the measured channel quality indication (CQI) to the transmitter for the transmitter to implement adaptive modulation and coding, etc.

FIG. 4 is a schematic diagram of an AI model-based CSI feedback system applicable to embodiments of the present application. As shown in FIG. 4, the entire feedback system includes an AI encoder 411 and an AI decoder 421 of an autoencoder, where the AI encoder 411 is deployed at a transmitter 410 and the AI decoder 421 is deployed at a receiver 420. The transmitter 410 compresses and encodes the CSI to be transmitted using the AI encoder 411 to obtain compressed CSI. The compressed CSI is then fed back to the receiver 420 via a feedback link, and the receiver 420 decodes the compressed CSI using the AI decoder 421 to obtain the recovered CSI. In this way, the communication overhead of feeding back CSI may be saved without compromising the accuracy of CSI transmission.

### AI model-based positioning

In cellular network wireless positioning, the direct propagation of electromagnetic waves between the network device and the terminal device is referred to as line of sight (LOS) wireless propagation. In some cases, electromagnetic wave signals cannot propagate in a straight line due to the obstruction of buildings or trees, which is commonly referred to as non line of sight (NLOS) wireless propagation. Traditional positioning algorithms such as time difference of arrival (TDOA) and angle-of-arrival (AOA) are based on LOS channels and are no longer applicable in environments dominated by NLOS. In most scenarios, the number of network devices that have LOS channels with the terminal device is often limited, resulting in insufficient accuracy of traditional positioning algorithms for high-precision positioning requirements. Additionally, non-ideal factors in practical systems may further reduce positioning accuracy.

Therefore, AI model-based high-precision positioning in an LOS/NLOS channel coexistence scenario has been proposed. Some existing research results indicate that by leveraging large amounts of channel data and training models using machine learning methods to explore the mapping relationship between channel responses and location coordinates, the problem that traditional positioning algorithms cannot be applied in the LOS/NLOS channel coexistence scenario may be overcome, thereby improving positioning accuracy.

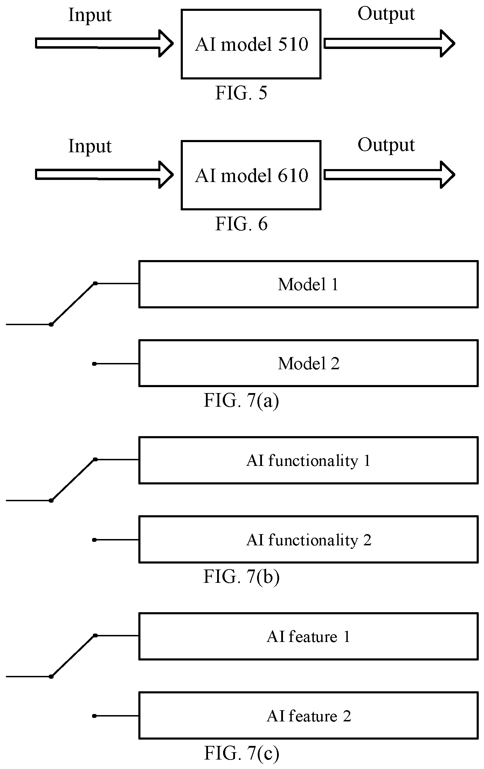

FIG. 5 illustrates a schematic diagram of an AI model-based positioning solution applicable to the embodiments of the present application. As shown in FIG. 5, in the positioning solution for an LOS/NLOS channel coexistence scenario implemented by an AI model 510, the channel response may be used as the input of the AI model 510, and location coordinates may be used as the output of the AI model 510. The intrinsic relationship between the wireless channel and the location of terminal device is learned by using the AI model 510. Thus, even in scenarios with insufficient LOS channels and/or in scenarios affected by non-ideal conditions, according to the AI model 510-based positioning solution, relatively high-accuracy location coordinates of the terminal device may be output, helping to meet the requirements for high-precision positioning.

The above content introduced several communication processes applicable to AI models. The following content introduces the AI models applicable to the embodiments of the present application. It should be noted that the AI models applicable to the embodiments of the present application are not limited to the several AI models introduced below.

### AI model-based beam management

In traditional beam selection processes, it is usually necessary to traverse all combinations of receiving beams and transmitting beams to select the appropriate beam. However, traversing all combinations requires a long time, resulting in low efficiency in beam selection.

For example, suppose a network device deploys 64 different downlink transmission directions in FR2 (carried by up to 64 synchronization signal and physical broadcast channel blocks (SSBs)). Correspondingly, the terminal device uses one or more antenna panels to simultaneously perform receiving beam scanning, with each antenna panel having 4 receiving beams. Then, the terminal device needs to measure at least 256 beam pairs, meaning that a downlink resource overhead of 256 resources is required. From a time perspective, each SSB period is approximately 20 ms, and 4 SSB periods are needed to complete measurements for 4 receiving beams. Assuming multiple receiving antenna panels may perform beam scanning simultaneously, at least 80 ms may be taken.

With the increase in the number of beams in future massive multiple-input multiple-output (MIMO) systems, using beam scanning-based beam management solutions to match the optimal beam pair will only result in greater reference signal transmission overhead and beam scanning latency. Therefore, to avoid the aforementioned issues, in R18, AI model-based beam management is proposed. The following sections introduce the AI model-based beam management solution by combining the training process and prediction process of the AI model.

Assuming the AI model is used to predict available beams from a beam set A, accordingly, during the training phase, a beam measurement result of a beam set B may serve as the training data for the AI model. In other words, the AI model is trained based on a beam measurement result of the beam set B, enabling the AI model to predict available beams from the beam set A.

It should be noted that the beam measurement result of the beam set B may include a measurement result corresponding to Layer 1 (L1) measurement quantity and/or indication information of selected beams in the beam set B (e.g., transmitting beam identifier, receiving beam identifier or beam pair identifier).

In some implementations, the training data may further include label information for the beam set A, the label information is used to indicate one or more of the following beams in the the beam set A: an optimal transmitting beam, an optimal receiving beam, an optimal beam pair, multiple suboptimal transmitting beams, multiple suboptimal receiving beams, or suboptimal beam pairs.

As shown in FIG. 6, during the prediction phase, the input of an AI model 610 may include a link quality measurement result (e.g., L1 measurement quantity) corresponding to beams in the beam set A. A prediction result output by the AI model 610 may include a target beam selected from the beam set A and link quality corresponding to the target beam.

In some implementations, the target beam may be one or multiple beams. For example, if the target beam is a single beam, the target beam may be the optimal beam or a suboptimal beam in the beam set A. For example, if the target beam includes multiple beams, the target beam may be multiple beams meet the requirement in the beam set A. Here, meeting the requirement can be understood as the link quality corresponding to the beam meeting the requirement, for example, the link quality corresponding to the beam is greater than or equal to a threshold.

In some other implementations, the target beam may refer to one or more beam pairs, where each beam pair may include a receiving beam or a transmitting beam. Taking the target beam as a single beam pair as an example, the target beam may be an optimal beam pair or a suboptimal beam pair in the beam set A. Taking the target beam as multiple beam pairs as an example, the target beam may be multiple beam pairs meeting the requirement in the beam set A, where meeting the requirement can be understood as the link quality corresponding to the beam pair meeting the requirement, for example, the link quality corresponding to the beam pair is greater than or equal to a threshold.

It should be noted that the link quality in the embodiments of the present application may be determined by one or more measurement quantities introduced above. Certainly, the link quality in the embodiments of the present application may also be determined based on other measurement quantities in future communication systems, which is not limited in the embodiments of the present application.

Additionally, the link quality being determined based on one or more measurement quantities can be understood as the link quality being obtained by processing one or more measurement quantities. Certainly, the link quality may also be the measurement quantity. This is not limited in the embodiments of the present application.

It should also be noted that if the prediction result only indicates one beam in a beam pair, the other beam in the beam pair may be determined through other manners, such as through a certain step or certain steps in the traditional beam selection procedure P1 to P3, or through a certain step or certain steps in the traditional beam selection procedure U1 to U3, which is not limited in the embodiments of the present application.

In some implementations, the beam set B may be different from the beam set A. In some implementations, the beam set B may be a subset of the beam set A. Accordingly, by measuring a smaller number of beams (beams in the beam set B), predictions for a large number of beams (beams in the beam set A) may be achieved. Compared to the beam selection scheme based on exhaustive traversal of all combinations described earlier, this helps reduce the time required for performing the beam selection process. Certainly, in the embodiments of the present application, the beams in the beam set B and the beams in the beam set A can be completely different beams. For example, there may be no overlap between the beams in the beam set B and the beams in the beam set A, but the beam directions corresponding to the beam set B may be similar to those corresponding to the beam set A.

In other implementations, the beam set B may be exactly the same beam set as the beam set A.

### Selection and activation process for model, AI feature, and AI functionality

As introduced earlier, models have been incorporated into some communication processes to further enhance communication performance. In the embodiments of the present application, a model may be an AI model, such as any of the AI models introduced earlier. Certainly, in the embodiments of the present application, the model may also be a model constructed based on machine learning in AI. Therefore, the AI model may also be referred to as an ML model or an AI/ML model.

Some existing technologies have discussed the selection and activation process for the model, the AI feature, and the AI functionality. The following content introduces the model, the AI feature, and the AI functionality respectively in combination with FIGS. 7(a) to 7(c).

As shown in FIG. 7(a), the network device may configure a model set for the terminal device, which may include Model 1 and Model 2. Subsequently, the network device may transmit indication information to the terminal device to activate one of models from the model set.

Typically, different models may be suitable for different communication environments. Therefore, if the currently activated model is no longer suitable for the current communication environment, the model needs to be switched, also known as model switching. For example, when a terminal device switches from one cell to another cell, the communication environment may change significantly. When the network device detects that the performance of Model 1 is poor, the network device may indicate, though indication information, the terminal device to switch from Model 1 to Model 2.

As shown in FIG. 7(b), the network device may configure an AI functionality set for the terminal device, which may include AI functionality 1 and AI functionality 2. Subsequently, the network device may transmit indication information to the terminal device to activate one of AI functionalities from the AI functionality set.

Typically, different AI functionalities may be suitable for different communication environments. Therefore, if the currently activated AI functionality is no longer suitable for the current communication environment, the AI functionality needs to be switched. For example, when the terminal device switches from one cell to another cell, the communication environment may change significantly. When the network device detects the performance of AI functionality 1 is poor, the network device may indicate, through indication information, the terminal device to switch from AI functionality 1 to AI functionality 2.

As shown in FIG. 7(c), the network device may configure an AI feature set for the terminal device, which may include AI feature 1 and AI feature 2. Subsequently, the network device may transmit indication information to the terminal device to activate one of AI features from the AI feature set.

Typically, different AI features may be suitable for different communication environments. Therefore, if the currently activated AI feature is no longer suitable for the current communication environment, the AI feature needs to be switched. For example, when the terminal device switches from one cell to another cell, the communication environment may change significantly. When the network device detects the performance of AI feature 1 is poor, the network device may indicate, through indication information, the terminal device to switch from AI feature 1 to AI feature 2.

In some known technologies, the network device transmits configuration information related to AI and/or ML to the terminal device. In traditional configuration processes, the network device adopts a uniform configuration approach. For example, the network device configures a uniform model for all terminal devices within its coverage. Another example is that the network device configures a uniform AI feature for all terminal devices within its coverage. Still another example is that the network device configures a uniform AI functionality for all terminal devices within its coverage. However, based on this unified configuration approach, it may lead to some terminal devices not being applicable to the corresponding configuration, reducing the accuracy of the configuration.

The applicant found that for terminal devices supporting different operating bandwidths, their required AI and/or ML-related configurations differ. On one hand, the larger the operating bandwidth, the more complex the communication environment, and correspondingly, the higher the complexity of the adapted model. Taking the operating bandwidth as BWP as an example, assume that the frequency domain range corresponding to BWP1 on which terminal device 1 operates is larger than the frequency domain range corresponding to BWP2 on which terminal device 2 operates, and the network device configures a lower-complexity Model 1 for both terminal device 1 and terminal device 2. In this case, for terminal device 2, if Model 1 is used on BWP2, the complexity of Model 1 may match the frequency domain range of BWP2, so that Model 1 has good model performance, resulting in high communication quality for terminal device 2. For terminal device 1, if Model 1 is used on BWP1, the complexity of Model 1 may not be sufficient to handle the frequency domain range of BWP2, so that Model 1 has poor model performance, resulting in degraded communication quality for terminal device 1. Therefore, the above uniform configuration is not suitable for terminal device 1 operating on BWP1, reducing the accuracy of the configuration.

On the other hand, for BWPs with larger subcarrier spacing (SCS), the corresponding time-domain symbol duration becomes shorter. For example, a subcarrier spacing corresponding to BWP1 is larger than a subcarrier spacing corresponding to BWP2, meaning that a length of time-domain symbols in BWP1 is shorter than a length of time-domain symbols in BWP2. Currently, the duration required for the model inference process is measured based on the number of time-domain symbols. Thus, for BWPs with larger subcarrier spacing compared to those with smaller subcarrier spacing, the required duration for the adapted model inference process becomes shorter. Continuing with BWP1 and BWP2 as examples, assume terminal device 1 operates on BWP1 and terminal device 2 operates on BWP2, and the network device configures Model 1 for both terminal device 1 and terminal device 2, where the duration required for one model inference of Model 1 is 2 time-domain symbols. In this case, for terminal device 2, if Model 1 is used on BWP2, the duration of 2 time-domain symbols required for one model inference process of Model 1 is the same as the duration of 2 time-domain symbols corresponding to BWP2. That is to say, Model 1 is applicable to terminal device 2. For terminal device 1, if Model 1 is used on BWP1, the duration of 2 time-domain symbols required for Model 1 to perform one model inference process is longer than the duration of 2 time-domain symbols corresponding to BWP1. That is to say, the 2 time-domain symbols corresponding to BWP1 are insufficient for Model 1 to perform one model inference process. Therefore, Model 1 is not applicable to terminal device 2. In this case, the aforementioned unified configuration is not applicable to terminal device 1 operating on BWP1, reducing the accuracy of the configuration.

Therefore, to address the above issues, the embodiments of the present application provide a method for transmitting configuration information, in which the network device can perform configurations based on the operating bandwidth corresponding to the terminal device. Compared to the unified configuration scheme, this helps improve the accuracy of the configuration. In the embodiments of the present application, the operating bandwidth is not limited. For example, the operating bandwidth may be a frequency band. As another example, the operating bandwidth may be a BWP. As still another example, the operating bandwidth may be a system bandwidth.

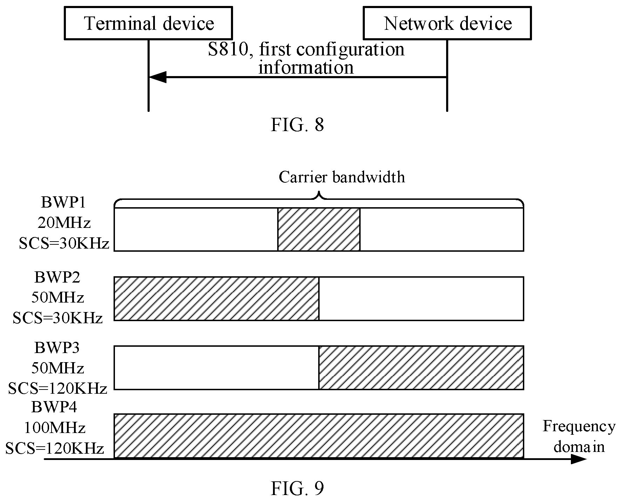

The following content, in combination with FIG. 8, takes the operating bandwidth as BWP as an example to introduce the method for transmitting configuration information in the embodiments of the present application. The method shown in FIG. 8 includes step S810.

In step S810, a network device transmits first configuration information to a terminal device, where the first configuration information is used to configure one or more of the following for a first BWP: a first model; a first AI functionality; or a first AI feature.

In some implementations, the first model may be an AI model, such as any of the AI models introduced earlier. Certainly, in the embodiments of the present application, the model may also be a model constructed based on machine learning in AI. Therefore, the AI model may also be referred to as an ML model or an AI/ML model. From this, it can be seen that one or more of: the first model, the first AI functionality, or the first AI feature are related to AI. Therefore, the first configuration information may also be referred to as "first AI configuration information".

In some scenarios, for multiple BWPs, the network device may transmit respective configuration information for each BWP among the multiple BWPs. Compared to the traditional unified configuration scheme, this helps improve the accuracy of the configuration information.

In the embodiments of the present application, the relationship between configuration information corresponding to multiple BWPs is not limited. For example, the configuration information corresponding to multiple BWPs may be the same. As another example, the configuration information corresponding to multiple BWPs may be different.

In some implementations, the first configuration information is used to configure one or more of: a frequency domain location of the first BWP, a frequency bandwidth of the first BWP, and numerology of the first BWP. That is, the first configuration information includes one or more of the following: the frequency domain location of the first BWP; the frequency bandwidth of the first BWP; and the numerology of the first BWP. It can be seen that the first configuration information used to configure the first BWP is associated with the first BWP, and thus may also be referred to as "first BWP configuration information."

Taking the first configuration information including the frequency domain location of the first BWP as an example, or in other words, the first configuration information is used to indicate the frequency domain location of the first BWP. For example, the first configuration information may carry the starting location of frequency domain of the first BWP. As another example, the first configuration information may carry the ending location of frequency domain of the first BWP.

Taking the first configuration information including the frequency bandwidth of the first BWP as an example, or in other words, the first configuration information is used to indicate the frequency bandwidth of the first BWP. For example, the first configuration information may carry the number of RBs occupied by the first BWP and indicate the frequency bandwidth of the first BWP through the number of RBs.

Taking the first configuration information including the numerology of the first BWP as an example, in some implementations, the numerology of the first BWP may include one or more of the following parameters: a subcarrier spacing of the first BWP; a cyclic prefix of the first BWP; or an identifier of the first BWP.

As mentioned earlier, the first BWP configuration information and the first AI configuration information may be carried in the same configuration information to simplify the transmission process of the configuration information. Certainly, in the embodiments of the present application, the first BWP configuration information and the first AI configuration information may be carried in different configuration information.

The first configuration information in the embodiments of the present application is introduced below in combination with Embodiment 1 to Embodiment 3.

**Embodiment 1**: the first configuration information is used to configure a first model for a first BWP.

In some implementations, the first configuration information is used to configure the first model for the first BWP. Alternatively, the first configuration information is used to indicate the first model supported by the first BWP, or the first configuration information is used to indicate model(s) not supported in the first BWP.

In the embodiments of the present application, the network device may configure the first model matching the first BWP for the terminal device through the first configuration information. That is, the first model is bound to the first BWP, which helps improve the communication quality of communication based on the first model on the first BWP. Additionally, using the first configuration information to configure the matching first model for the first BWP helps improve the accuracy of the configuration, thereby reducing the overhead of transmitting the first configuration information.

In some implementations, the first configuration information may carry a model identifier of the first model and configure the first model for the first BWP through the model identifier of the first model, which helps reduce the overhead of transmitting the first configuration information. Certainly, in the embodiments of the present application, the first configuration information may include the first model itself. For example, the first configuration information may include the model structure of the first model and model parameters of the first model. Alternatively, the first configuration information may only include the model parameters of the first model. Accordingly, the terminal device may obtain the first model based on the preconfigured or predefined model structure of the first model and the model parameters of the first model acquired from the first configuration information.

In the embodiments of the present application, the number of models configured by the first configuration information is not limited. For example, the first configuration information may only be used to configure one model for the first BWP, namely the first model. As another example, the first configuration information may be used to configure multiple models for the first BWP, where the multiple models may include the first model. The way the multiple models are carried in the first configuration information is similar to the way the first model is carried in the first configuration information as described earlier, which will not be repeated here for brevity.

In some implementations, the first configuration information is used to configure the first BWP with one or more models that implement an AI functionality (also referred to as the first AI functionality), where the one or more models include the first model, which helps improve the flexibility of implementing the first AI functionality on the first BWP. Certainly, in the embodiments of the present application, the models may also be used to implement different AI functionalities.

In other implementations, the first configuration information is used to configure the first BWP with one or more models that implement an AI feature (also referred to as the first AI feature), where the one or more models include the first model, which helps improve the flexibility of implementing the first AI feature on the first BWP. Certainly, in the embodiments of the present application, the models may also be used to implement different AI features.

In some implementations, the first configuration information may also be used to configure the first BWP with a first default model, where the first default model is activated in response to the first BWP being activated. In other words, the first default model is activated by default (or automatically activated) at the same time as the first BWP is activated, which helps reduce the signaling overhead required for model activation.

In the embodiments of the present application, the first default model is not limited. In some implementations, the first default model may be a model with relatively stable performance, or the first default model may be the most reliable model, to ensure the communication quality of communication on the first BWP. Assume that models corresponding to the first BWP may include Model 1 and Model 2, and the average model inference accuracy of Model 1 is lower than the average model inference accuracy of Model 2. In this case, Model 2 may be designated as the first default model. Generally, models with better generalization performance are applicable to a wider range of scenarios. Therefore, in other implementations, the first default model may be the model with the best generalization performance to ensure the communication quality of communication on the first BWP. Assume that the models corresponding to the first BWP may include Model 1 and Model 2, and the generalization performance of Model 1 is higher than that of Model 2. In this case, Model 1 may be designated as the first default model.

In the embodiments of the present application, the manner for configuring the first default model using the first configuration information is not limited. For example, if the first configuration information is used to configure the first model, the first model may serve as the first default model. In other words, the first configuration information may be used to configure the first default model for the first BWP. For another example, if the first configuration information is used to configure multiple models, the first configuration information is also used to indicate the first default model from the multiple models. Certainly, in the embodiments of the present application, the information indicating the first default model and the first configuration information may be different, which is not limited in the embodiments of the present application.

The above content introduced the activation manner of the first default model in the embodiments of the present application. The following content introduces the activation manners of other models among models configured for the first BWP, where the other models may be other models, excluding the first default model, among the multiple models configured for the first BWP. It should be understood that the activation manners of other models described below may also be used for the activation of the first default model.

In some implementations, the method further includes: transmitting, by the network device, first indication information to the terminal device, where the first indication information is used to indicate to activate other models among the multiple models, which helps improve the flexibility of activating other models.

In some implementations, the usage duration of the other models may be determined based on a first timer, which helps reduce the overhead of signaling for indicating the termination of using the other models. That is, the method further includes: in response to receiving the first indication information, starting, by the terminal device, the first timer; and during operation of the first timer, and communicating, by the terminal device, with the network device based on the other models. Certainly, in the embodiments of the present application, if the above issues are considered, the network device may indicate the terminal device to stop using the other models through indication information.

In some implementations, the other models are used for communication between the terminal device and the network device. Therefore, the network device may also need to know when to activate the other models and when to deactivate the other models. Accordingly, in the embodiments of the present application, the network device may also maintain the first timer, and the start and operation time of the first timer are similar to those of the first timer maintained by the terminal device. For example, the method further includes: in response to transmitting the first indication information, starting, by the network device, the first timer; and during operation of the first timer, communicating, by the network device, with the terminal device based on the other models.

In the embodiments of the present application, the first timer is not limited. For example, the first timer may be a first countdown timer. Correspondingly, in response to receiving the first indication information, the terminal device starts the first countdown timer, and during operation of the first countdown timer, the terminal device communicates with the network device based on the other models.

In some implementations, if the usage duration of the other model expires, the terminal device may fall back from the other model to the first default model and communicate based on the first default model. Certainly, in the embodiments of the present application, the fallback model is not limited. For example, the fallback model may be a certain model among the multiple models configured for the first BWP excluding the first default model. That is to say, the method further includes: in response to expiration of the first timer, communicating, by the terminal device, with the network device based on the first default model.

As mentioned earlier, for the first timer maintained by the network device, the method further includes: in response to expiration of the first timer, communicating, by the network device, with the terminal device based on the first default model.

In the embodiments of the present application, the first timer is not limited. For example, the first timer may be a first countdown timer. Correspondingly, in response to the first countdown timer decrementing to 0, the terminal device communicates with the network device based on the first default model.

For example, the multiple models configured by the network device for the first BWP include Model 1 and Model 2, where Model 2 serves as the first default model. The average model inference accuracy of Model 1 is lower than the average model inference accuracy of Model 2, and a model inference duration of Model 1 is shorter than a model inference duration of Model 2. Correspondingly, the network device may indicate the terminal device to activate Model 1 through the first indication information. Correspondingly, after receiving the first indication information, the terminal device activates the first timer and communicates based on Model 1 during the operation of the first timer. That is to say, when the requirement for model inference accuracy is not very high, Model 1 may be used for model inference to reduce the model inference duration. Subsequently, when the first timer expires, the terminal device falls back from Model 1 to Model 2 and continues communication based on Model 2 to ensure the accuracy of model inference.

In some implementations, the usage duration of the first default model may also be determined based on a timer. Taking Timer 1 as an example, the method further includes: in response to activating the first BWP, starting Timer 1, and during operation of Timer 1, communicating, by the terminal device, with the network device based on the first default model. Correspondingly, Timer 1 may be maintained by the terminal device and/or the network device.

Certainly, in the embodiments of the present application, the usage duration of the first default model may also be determined based on indication information transmitted by the network device. For example, the network device may transmit indication information to the terminal device to indicate to deactivate the first default model.

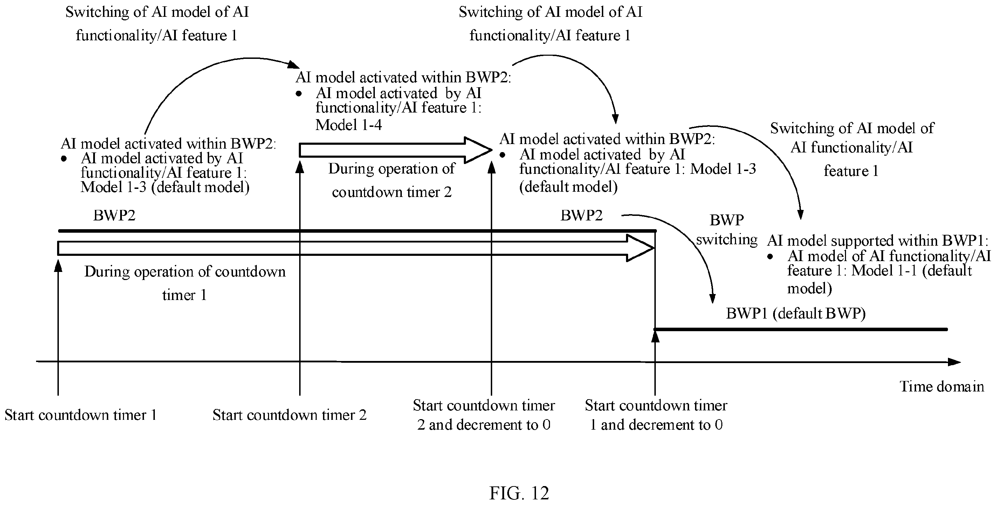

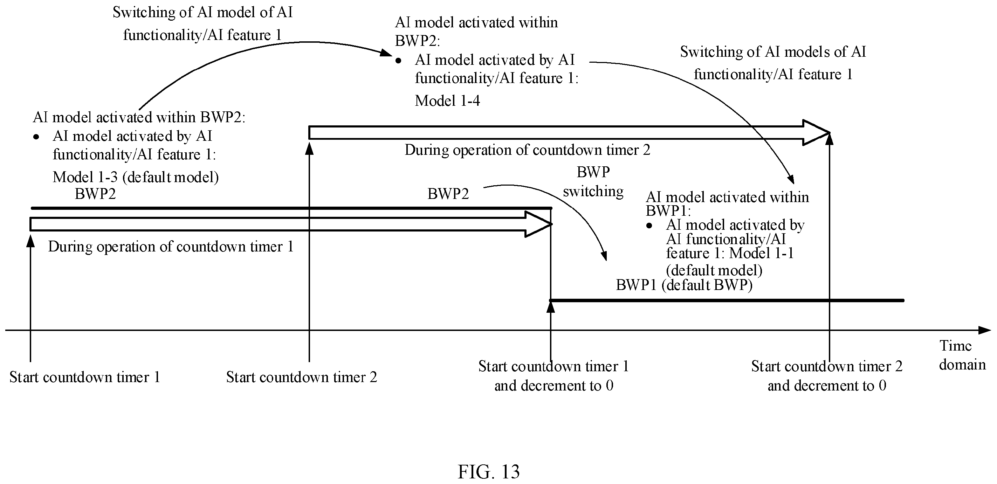

In some implementations, if during the operation of Timer 1, the network device transmits the first indication information to the terminal device, other models may be activated based on the first indication information. For the use of other models, the earlier introduction regarding the first timer may be referred to. This will be introduced in detail below in combination with FIGS. 12 and 13, which will not be repeated here for brevity.

It should be noted that in the embodiments of the present application, Timer 1 corresponding to the first default model can be understood as the timer corresponding to BWP1. That is to say, the usage duration of BWP1 may be determined based on Timer 1. In other words, in response to activation of BWP1, Timer 1 is started, and during operation of Timer 1, BWP1 is used for communication. Additionally, in response to expiration of Timer 1, BWP1 is deactivated.

In some implementations, if BWP1 is deactivated, the first configuration information corresponding to BWP1 is also deactivated. In this case, Timer 1 may be a fourth timer described below. Certainly, in the embodiments of the present application, the deactivation of the first configuration information may also be indicated by the network device through additional information.

**Embodiment 2**: the first configuration information is used to configure a first AI functionality for a first BWP.

In some implementations, the first configuration information is used to configure the first AI functionality for the first BWP. Alternatively, the first configuration information may indicate the first AI functionality supported by the first BWP, or the first configuration information may indicate AI functionality(s) not supported by the first BWP.

In the embodiments of the present application, the network device may configure the first AI functionality matching the first BWP for the terminal device through the first configuration information. In other words, bundling the first AI functionality with the first BWP helps improve the communication quality of communication on the first BWP based on the first AI functionality. Additionally, using the first configuration information to configure the matching first AI functionality for the first BWP helps improve the accuracy of the configuration and reduces the overhead of transmitting the first configuration information.

In some implementations, the AI functionality can be understood as a communication functionality implemented based on AI. In some scenarios, AI may be implemented based on ML. Therefore, the aforementioned AI functionality may also be referred to as "ML capability" or "AI/ML functionality". For example, the first AI functionality includes a CSI feedback functionality implemented based on AI. As another example, the first AI functionality includes a positioning functionality implemented based on AI. As another example, the first AI functionality includes a beam management functionality implemented based on AI.

In some implementations, the first configuration information may carry an AI functionality identifier of the first AI functionality and configure the first AI functionality for the first BWP through the AI functionality identifier of the first AI functionality, which helps reduce the overhead of transmitting the first configuration information.

In the embodiments of the present application, there is no limitation on the number of AI functionalities configured by the first configuration information. For example, the first configuration information may only be used to configure one AI functionality for the first BWP, namely the first AI functionality. As another example, the first configuration information may be used to configure multiple AI functionalities for the first BWP, which may include the first AI functionality. The way these multiple AI functionalities are carried in the first configuration information is similar to the way the first AI functionality is carried in the first configuration information, as described earlier, which will not be repeated here for brevity.

In some implementations, the first configuration information may also be used to configure a first default AI functionality for the first BWP, where the first default AI functionality is activated in response to the first BWP being activated. In other words, the first default AI functionality is activated by default (or automatically activated) at the same time as the first BWP is activated, which helps reduce the signaling overhead required for the AI functionality activation process.

In the embodiments of the present application, the first default AI functionality is not limited. In some implementations, the first default AI functionality may be an AI functionality applicable to broader scenarios, or the first default AI functionality may be an AI functionality with higher reliability, or the first default AI functionality may be an AI functionality with better generalization performance, to ensure the communication quality of communication on the first BWP. Taking the AI functionality configured for the first BWP as a positioning functionality implemented based on AI as an example, the AI functionality configured for the first BWP may include an indoor positioning functionality implemented based on AI, an outdoor positioning functionality implemented based on AI, and a general scenario positioning implemented based on AI, where the general scenario positioning implemented based on AI may be applied to both the positioning process of indoor scenarios and the positioning process of outdoor scenarios. In this case, the general scenario positioning implemented based on AI may be designated as the first default AI functionality.

In the embodiments of the present application, the manner for configuring the first default AI functionality using the first configuration information is not limited. For example, if the first configuration information is used to configure the first AI functionality, then the first AI functionality may serve as the first default AI functionality. In other words, the first configuration information may be used to configure the first default AI functionality for the first BWP. As another example, if the first configuration information is used to configure multiple AI functionalities, the first configuration information is also used to indicate the first default AI functionality from the multiple AI functionalities. Certainly, in the embodiments of the present application, the information indicating the first default AI functionality and the first configuration information may be different, which is not limited in the embodiments of the present application.

The above content introduced the activation manner of the first default AI functionality in the embodiments of the present application. The following content introduces the activation manners of other AI functionalities among AI functionalities configured for the first BWP, where the other AI functionalities may be other AI functionalities, excluding the first default AI functionality, among the multiple AI functionalities configured for the first BWP. It should be understood that the activation manners of other AI functionalities introduced below may also be applied to the activation of the first default AI functionality.

In some implementations, the method further includes: transmitting, by the network device, second indication information to the terminal device, where the second indication information is used to indicate to activate other AI functionalities among the multiple AI functionalities, which helps improve the flexibility of activating other AI functionalities.

In some implementations, the usage duration of the other AI functionalities may be determined based on a second timer, which helps reduce the overhead of transmitting signaling for indicating to stop using other AI functionalities. That is to say, the method further includes: in response to receiving the second indication information, starting, by the terminal device, the second timer; and during operation of the second timer, communicating, by the terminal device, with the network device based on the other AI functionalities. Certainly, in the embodiments of the present application, if the aforementioned issues are considered, the network device may indicate the terminal device to stop using other AI functionalities through indication information.

In some implementations, the other AI functionalities are used for communication between the terminal device and the network device. Therefore, the network device may also need to know when to activate the other AI functionalities and when to deactivate the other AI functionalities. Accordingly, in the embodiments of the present application, the network device may also maintain the second timer, and the start and operation time of the second timer are similar to those of the second timer maintained by the terminal device. For example, the method further includes: in response to transmitting the second indication information, starting, by the network device, the second timer; and during the operation of the second timer, communicating, by the network device, with the terminal device based on the other AI functionalities.

In the embodiments of the present application, the second timer is not limited. For example, the second timer may be a second countdown timer. Accordingly, in response to receiving the second indication information, the terminal device starts the second countdown timer, and during operation of the second countdown timer, the terminal device communicates with the network device based on the other AI functionalities.

In some implementations, if the usage duration of the other AI functionalities expires, the terminal device may fall back from the other AI functionalities to the first default AI functionality and communicate based on the first default AI functionality. Certainly, in the embodiments of the present application, the fallback AI functionality is not limited. For example, the fallback AI functionality may be one of the multiple AI functionalities configured for the first BWP, excluding the first default AI functionality. That is to say, the method further includes: in response to expiration of the second timer, communicating, by the terminal device, with the network device based on the first default AI functionality.

As mentioned earlier, for the second timer maintained by the network device, the method further includes: in response to expiration of the second timer, communicating, by the network device, with the terminal device based on the first default AI functionality.

In the embodiments of the present application, the second timer is not limited. For example, the second timer may be a second countdown timer. Accordingly, in response to the second countdown timer decrementing to 0, the terminal device communicates with the network device based on the first default AI functionality.

For example, the multiple AI functionalities configured by the network device for the first BWP include an AI-based indoor positioning functionality and an AI-based general scenario positioning functionality, where the AI-based general scenario positioning functionality serves as the first default AI functionality. Accordingly, if the network device detects that the terminal device enters an indoor environment, the network device may indicate the terminal device to activate the AI-based indoor positioning functionality through the second indication information. Accordingly, after receiving the second indication information, the terminal device activates the second timer and performs positioning based on the AI-based indoor positioning functionality during operation of the second timer. When the second timer expires, the terminal device falls back from the AI-based indoor positioning functionality to the AI-based general scenario positioning functionality and continues performing positioning based on the AI-based general scenario positioning functionality.

In some implementations, the usage duration of using the first default AI functionality may also be determined based on a timer. Taking Timer 2 as an example, the method further includes: in response to activating the first BWP, starting Timer 2, and during operation of Timer 2, communicating, by the terminal device, with the network device based on the first default AI functionality. Accordingly, Timer 2 may be maintained by the terminal device and/or the network device.

Certainly, in the embodiments of the present application, the usage duration of the first default AI functionality may also be determined based on indication information transmitted by the network device. For example, the network device may transmit indication information to the terminal device to indicate to deactivate the first default AI functionality.

In some implementations, if the network device transmits second indication information to the terminal device during operation of Timer 2, other AI functionalities may be activated based on the second indication information. For the usage of other AI functionalities, the previous description regarding the second timer may be referred to. This will be introduced in detail below in combination with FIGS. 12 and 13, which will not be repeated here for brevity.

It should be noted that in the embodiments of the present application, Timer 2 corresponding to the first default AI functionality can be understood as the timer corresponding to BWP1. That is to say, the usage duration of BWP1 may be determined based on Timer 2. In other words, in response to activation of BWP1, Timer 2 is started, and during operation of Timer 2, BWP1 is used for communication. Additionally, in response to expiration of Timer 2, BWP1 is deactivated.

In some implementations, if BWP1 is deactivated, the first configuration information corresponding to BWP1 is also deactivated. In this case, Timer 2 may be the fourth timer described below. Certainly, in the embodiments of the present application, the deactivation of the first configuration information may also be indicated by the network device through additional information.

**Embodiment 3**: the first configuration information is used to configure a first AI feature for a first BWP.

In some implementations, the first configuration information being used to configure the first AI feature for the first BWP may be replaced with: the first configuration information being used to indicate the first AI feature supported by the first BWP, alternatively, the first configuration information being used to indicate AI feature(s) not supported by the first BWP.

In the embodiments of the present application, the network device may configure the first AI feature matching the first BWP for the terminal device through the first configuration information. That is to say, bundling the first AI feature with the first BWP helps improve the communication quality of communication on the first BWP based on the first AI feature. Additionally, using the first configuration information to configure the matching first AI feature for the first BWP helps improve the accuracy of the configuration, thereby reducing the overhead of transmitting the first configuration information.

In some implementations, AI features can be understood as features implemented based on AI in communication systems. In some scenarios, AI may be implemented based on ML. Therefore, the aforementioned AI feature may also be referred to as an "ML feature" or an "AI/ML feature". For example, the first AI feature includes a CSI feedback feature implemented based on AI. As another example, the first AI feature includes a positioning feature implemented based on AI. As another example, the first AI feature includes a beam management feature implemented based on AI.

In some implementations, the first configuration information may carry an AI feature identifier of the first AI feature, and the first AI feature is configured for the first BWP through the AI feature identifier of the first AI feature, which helps reduce the overhead of transmitting the first configuration information.

In the embodiments of the present application, the number of AI features configured by the first configuration information is not limited. For example, the first configuration information may only be used to configure one AI feature for the first BWP, namely, the first AI feature. For another example, the first configuration information may be used to configure multiple AI features for the first BWP, which may include the first AI feature. The way the multiple AI features are carried in the first configuration information is similar to the way the first AI feature is carried in the first configuration information, as described earlier, which will not be repeated here for brevity.

In some implementations, the first configuration information may also be used to configure a first default AI feature for the first BWP. The first default AI feature is activated in response to the first BWP being activated. In other words, the first default AI feature is activated by default (or automatically activated) at the same time as the first BWP is activated, which helps reduce the signaling overhead required for the AI feature activation process.

In the embodiments of the present application, the first default AI feature is not limited. In some implementations, the first default AI feature may be an AI feature applicable to broader scenarios, or the first default AI feature may be an AI feature with better reliability, or the first default AI feature may be an AI feature with better generalization performance, to ensure the communication quality of communication on the first BWP. Taking the AI feature configured for the first BWP as a positioning feature implemented based on AI as an example, the AI feature configured for the first BWP may include an indoor positioning feature implemented based on AI, an outdoor positioning feature implemented based on AI, and a general scenario positioning implemented based on AI. Here, the general scenario positioning implemented based on AI may be applied to both the positioning process of indoor scenarios and the positioning process of outdoor scenarios. In this case, the general scenario positioning implemented based on AI may be designated as the first default AI feature.

In the embodiments of the present application, the manner for configuring the first default AI feature using the first configuration information is not limited. For example, if the first configuration information is used to configure the first AI feature, the first AI feature may serve as the first default AI feature. In other words, the first configuration information may be used to configure the first default AI feature for the first BWP. As another example, if the first configuration information is used to configure multiple AI features, the first configuration information is also used to indicate the first default AI feature from the multiple AI features. Certainly, in the embodiments of the present application, the information indicating the first default AI feature and the first configuration information may be different, which is not limited in the present application.

The above content introduced the activation manner of the first default AI feature in the embodiments of the present application. The following content introduces the activation manners of other AI features among AI AI features configured for the first BWP. Here, the other AI features may be other AI features, excluding the first default AI feature, among the multiple AI features configured for the first BWP. It should be understood that the activation manners of other AI features introduced below may also be applied to the activation of the first default AI feature.

In some implementations, the method further includes: transmitting, by the network device, third indication information to the terminal device, where the third indication information is used to indicate to activate other AI features among the multiple AI features, which helps improve the flexibility of activating other AI features.

In some implementations, the usage duration of the other AI features may be determined based on a third timer, which helps reduce the overhead of transmitting signaling for indicating to stop using other AI features. That is to say, the method further includes: in response to receiving third indication information, starting, by the terminal device, the third timer; and during operation of the third timer, communicating, by the terminal device, with the network device based on other AI features. Certainly, in the embodiments of the present application, if the above issues are considered, the network device may indicate the terminal device to stop using other AI features through indication information.

In some implementations, other AI features are used for communication between the terminal device and the network device. Therefore, the network device may also need to know when to activate other AI features and when to deactivate the other AI features. Accordingly, in the embodiments of the present application, the network device may also maintain the third timer, and the start and operation time of the third timer are similar to those of the third timer maintained by the terminal device. For example, the method further includes: in response to transmitting the third indication information, starting, by the network device, the third timer; and during operation of the third timer, communicating, by the network device, with the terminal device based on other AI features.

In the embodiments of the present application, the third timer is not limited. For example, the third timer may be a third countdown timer. Accordingly, in response to receiving the third indication information, the terminal device starts the third countdown timer, and during operation of the third countdown timer, the terminal device communicates with the network device based on other AI features.

In some implementations, if the usage duration of other AI features expires, the terminal device may fall back from other AI features to the first default AI feature and communicate based on the first default AI feature. Certainly, in the embodiments of the present application, the fallback AI feature is not limited. For example, the fallback AI feature may be one of the multiple AI features configured for the first BWP, excluding the first default AI feature. That is to say, the method further includes: in response to expiration of the third timer, communicating, by the terminal device, with the network device based on the first default AI feature.

As mentioned earlier, for the third timer maintained by the network device, the method further includes: in response to expiration of the third timer, communicating, by the network device, with the terminal device based on the first default AI feature.

In the embodiments of the present application, the third timer is not limited. For example, the third timer may be a third countdown timer. Accordingly, in response to the third countdown timer decrementing to 0, the terminal device communicates with the network device based on the first default AI feature.

For example, the multiple AI features configured by the network device for the first BWP include an AI-based indoor positioning feature and an AI-based general scenario positioning feature, where the AI-based general scenario positioning feature serves as the first default AI feature. Accordingly, if the network device detects that the terminal device enters an indoor environment, the network device may indicate the terminal device to activate the AI-based indoor positioning feature through the third indication information. Accordingly, after receiving the third indication information, the terminal device activates the third timer, and performs positioning based on the AI-based indoor positioning feature during operation of the third timer. When the third timer expires, the terminal device falls back from the AI-based indoor positioning feature to the AI-based general scenario positioning feature and continues performing positioning based on the AI-based general scenario positioning feature.

In some implementations, the usage duration of the first default AI feature may also be determined based on a timer. Taking Timer 3 as an example, the method further includes: in response to activating the first BWP, starting Timer 3, and during operation of Timer 3, communicating, by the terminal device, with the network device based on the first default AI feature. Accordingly, Timer 3 may be maintained by the terminal device and/or the network device.

Certainly, in the embodiments of the present application, the usage duration of the first default AI feature may also be determined based on indication information transmitted by the network device. For example, the network device may transmit indication information to the terminal device to indicate to deactivate the first default AI feature.

In some implementations, if the network device transmits third indication information to the terminal device during operation of Timer 3, other AI features may be activated based on the third indication information. For the usage of other AI features, the previous introduction regarding the third timer may be referred to. This will be introduced in detail below in combination with FIGS. 12 and 13, and will not be repeated here for brevity.

It should be noted that in the embodiments of the present application, Timer 3 corresponding to the first default AI feature can be understood as the timer corresponding to BWP1. That is to say, the usage duration of BWP1 may be determined based on Timer 2. In other words, in response to activation of BWP1, Timer 3 is started, and during operation of Timer 3, BWP1 is used for communication. Additionally, in response to expiration of Timer 3, BWP1 is deactivated.

In some implementations, if BWP1 is deactivated, the first configuration information corresponding to BWP1 is also deactivated. In this case, Timer 3 may be the fourth timer described below. Certainly, in the embodiments of the present application, the deactivation of the first configuration information may also be indicated by the network device through additional information.

As introduced earlier, the network device may configure the BWP. In some scenarios, if a certain BWP is activated for the terminal device, the terminal device may communicate based on the configuration information corresponding to the BWP. That is to say, the method further includes: in response to activating the first BWP, communicating, by the terminal device, with the network device based on the first configuration information.

In the embodiments of the present application, the scenario for activating the first BWP is not limited. For example, the activation of the first BWP is triggered by BWP switching. That is to say, activating the first BWP includes: switching, by the terminal device, from a second BWP to the first BWP, where the second BWP is different from the first BWP. As another example, the first BWP may be initially activated by the network device for the terminal device. That is to say, activating the first BWP includes: indicating, by the network device, the activated first BWP to the terminal device, where the initial activation does not involve the switching process between multiple BWPs.

In some implementations, if the terminal device switches from the second BWP to the first BWP. Accordingly, the terminal device may switch from the first configuration information corresponding to the second BWP to the first configuration information corresponding to the first BWP. Here, the first configuration information corresponding to the second BWP is used to configure the second BWP. Additionally, the first configuration information corresponding to the second BWP serves a similar purpose to the first configuration information introduced earlier for configuring the first BWP. For details, please refer to the earlier introduction of the first configuration information, which will not be repeated below for brevity.

In some implementations, the duration for which the terminal device uses the first configuration information may be determined based on a fourth timer. For example, the method further includes: in response to activating the first BWP, starting, by the terminal device, the fourth timer; and during operation of the fourth timer, communicating, by the terminal device, with the network device based on the first configuration information.

In the embodiments of the present application, the fourth timer is not limited. For example, the fourth timer may be a fourth countdown timer. Accordingly, in response to activating the first BWP, starting, by the terminal device, the fourth countdown timer, and during operation of the fourth countdown timer, communicating, by the terminal device, with the network device based on the first configuration information.

In some implementations, the method further includes: in response to expiration of the fourth timer, communicating, by the terminal device, with the network device based on second configuration information, where the second configuration information is used to configure one or more of the following for a third BWP: a second model; a second AI functionality; or a second AI feature. That is to say, when the fourth timer expires, the terminal device falls back to the third BWP and communicates based on the second configuration information corresponding to the third BWP. It should be understood that the second configuration information has a similar function to the first configuration information. For details, please refer to the earlier introduction of the first configuration information, which will not be repeated below for brevity.

In the embodiments of the present application, the fourth timer is not limited. For example, the fourth timer may be a fourth countdown timer. Accordingly, the expiration of the fourth timer may include the fourth countdown timer decrementing to 0. That is, in response to the fourth countdown timer decrementing to 0, the terminal device communicates with the network device based on the second configuration information.

In some implementations, the third BWP is a default BWP. Certainly, in the embodiments of the present application, the third BWP may also be another BWP configured by the terminal device, which is not limited in the embodiments of the present application.

In some implementations, the third BWP may support multiple models, and the multiple models include a default model of the third BWP. After the terminal device falls back to the third BWP, the terminal device may communicate based on the default model of the third BWP. Certainly, in the embodiments of the present application, after the terminal device falls back to the third BWP, the terminal device may communicate based on any one of the multiple models.

For example, if the second configuration information is used to configure a default model for the third BWP, communicating, by the terminal device, with the network device based on the second configuration information includes: communicating, by the terminal device, with the network device based on the default model in the third BWP configured by the second configuration information.

In some implementations, the third BWP may support multiple AI functionalities, and the multiple AI functionalities include a default AI functionality of the third BWP. After the terminal device falls back to the third BWP, it may communicate based on the default AI functionality of the third BWP. Certainly, in the embodiments of the present application, after the terminal device falls back to the third BWP, it may communicate based on any one of the multiple AI functionalities.

For example, if the second configuration information is used to configure a default AI functionality for the third BWP, communicating, by the terminal device, with the network device based on the second configuration information includes: communicating, by the terminal device, with the network device based on the default AI functionality in the third BWP configured by the second configuration information.

In some implementations, the third BWP may support multiple AI features, and the multiple AI features include a default AI feature of the third BWP. After the terminal device falls back to the third BWP, it may communicate based on the default AI feature of the third BWP. Certainly, in the embodiments of the present application, after the terminal device falls back to the third BWP, it may communicate based on any one of the multiple AI features.

For example, if the second configuration information is used to configure a default AI feature for the third BWP, communicating, by the terminal device, with the network device based on the second configuration information includes: communicating, by the terminal device, with the network device based on the default AI feature in the third BWP configured by the second configuration information.

It should be noted that the first configuration information introduced in combination with Embodiment 1 to Embodiment 3 above may be used separately or in combination with each other. The following content introduces the solution where Embodiment 1 to Embodiment 3 are used in combination with each other in combination with FIG. 9.

FIG. 9 shows four types of BWP applicable to the embodiments of the present application. As shown in FIG. 9, assume the network device configures four BWPs for the terminal device: BWP1 to BWP4. Here, the bandwidth of BWP1 is 20 MHz, and the SCS of BWP1 is 30 kHz. The bandwidth of BWP2 is 50 MHz, and the SCS of BWP2 is 30 kHz. The bandwidth of BWP3 is 50 MHz, and the SCS of BWP3 is 120 kHz. The bandwidth of BWP4 is 100 MHz, and the SCS of BWP4 is 120 kHz. Additionally, the network device has configured each BWP of the above BWP1 to BWP4, where the respective configuration for each BWP can be seen in Table 1.

**Table 1**

| | | |
|---|---|---|
| First configuration information for BWP1 | BWP1 configuration | Bandwidth = 20 MHz |
| | | Subcarrier spacing = 30 kHz |
| | AI functionality/AI feature configuration | AI functionality/AI feature 1: supported |
| | | AI functionality/AI feature 2: supported |
| | | AI functionality/AI feature 3: supported |
| | Model configuration supported by AI functionality/AI feature 1 | Model 1-1 (default model); Model 1-2 |
| | Model configuration supported by AI functionality/AI feature 2 | Model 2-1 (default model) |
| | | Model 2-2 |
| | | Model 2-3 |
| | Model configuration supported by AI functionality/AI feature 3 | Model 3-1 (default model) |
| | | Model 3-2 |
| | | Model 3-3 |
| Second configuration information for BWP2 | BWP2 configuration | Bandwidth = 50 MHz |
| | | Subcarrier spacing = 30 kHz |
| | AI functionality/AI feature configuration | AI functionality/AI feature 1: supported |
| | | AI functionality/AI feature 2: supported |
| | | AI functionality/AI feature 3: unsupported |
| | Model configuration supported by AI functionality/AI feature 1 | Model 1-3 (default model) Model 1-4 |
| | Model configuration supported by AI functionality/AI feature 2 | Model 2-4 (default model) |
| | | Model 2-5 |
| | | Model 2-6 |
| First configuration information for BWP3 | BWP3 configuration | Bandwidth = 50 MHz |
| | | Subcarrier spacing = 120 kHz |
| | AI functionality/AI feature configuration | AI functionality/AI feature 1: supported |
| | | AI functionality/AI feature 2: unsupported |
| | | AI functionality/AI feature 3: supported |
| | Model configuration supported by AI functionality/AI feature 1 | Model 1-5 (default model) Model 1-6 |
| | Model configuration supported by AI functionality/AI feature 3 | Model 3-4 (default model) |
| | | Model 3-5 |
| | | Model 3-6 |
| First configuration information for BWP4 | BWP4 configuration | Bandwidth = 100 MHz |
| | | Subcarrier spacing = 120 kHz |
| | AI functionality/AI feature configuration | AI functionality/AI feature 1: unsupported |
| | | AI functionality/AI feature 2: unsupported |
| | | AI functionality/AI feature 3: unsupported |

As shown in Table 1, the first configuration information for BWP1 includes the BWP1 configuration, the AI functionality/AI feature configuration, the model configuration supported by AI functionality/AI feature 1, the model configuration supported by AI functionality/AI feature 2, and the model configuration supported by AI functionality/AI feature 3. Here, the BWP1 configuration is used to configure the bandwidth of BWP1 as 20 MHz and the SCS of BWP1 as 30 kHz. The AI functionality/AI feature configuration is used to indicate that BWP1 supports the AI functionality/AI feature 1, the AI functionality/AI feature 2, and the AI functionality/AI feature 3. The model configuration supported by AI functionality/AI feature 1 is used to configure the BWP1 with multiple models that implement the AI functionality/AI feature 1, which includes: Model 1-1 and Model 1-2, where Model 1-1 is the default model. The model configuration supported by AI functionality/AI feature 2 is used to configure the BWP1 with multiple models that implement the AI functionality/AI feature 2, which includes: Model 2-1, Model 2-2, and Model 2-3, where Model 2-1 is the default model. The model configuration supported by AI functionality/AI feature 3 is used to configure the BWP1 with multiple models that implement the AI functionality/AI feature 3, which includes: Model 3-1, Model 3-2, and Model 3-3, where Model 3-1 is the default model.

The first configuration information for BWP2 includes the BWP2 configuration, the AI functionality/AI feature configuration, the model configuration supported by AI functionality/AI feature 1, and the model configuration supported by AI functionality/AI feature 2. Here, the BWP2 configuration is used to configure the bandwidth of BWP2 as 50 MHz and the SCS of BWP2 as 30 kHz. The AI functionality/AI feature configuration is used to indicate that BWP2 supports the AI functionality/AI feature 1 and the AI functionality/AI feature 2, but does not support the AI functionality/AI feature 3. The model configuration supported by AI functionality/AI feature 1 is used to configure the BWP2 with multiple models that implement the AI functionality/AI feature 1, which includes: Model 1-3 and Model 1-4, where Model 1-3 is the default model. The model configuration supported by AI functionality/AI feature 2 is used to configure the BWP2 with multiple models that implement the AI functionality/AI feature 2, which includes: Model 2-4, Model 2-5, and Model 2-6, where Model 2-4 is the default model.

The first configuration information for BWP3 includes the BWP3 configuration, the AI functionality/AI feature configuration, the model configuration supported by AI functionality/AI feature 1, and the model configuration supported by AI functionality/AI feature 3. Here, the BWP3 configuration is used to configure the bandwidth of BWP3 as 50 MHz and the SCS of BWP3 as 120 kHz. The AI feature configuration is used to indicate that BWP3 supports the AI functionality/AI feature 1 and the AI functionality/AI feature 3, but does not support the AI functionality/AI feature 2. The model configuration supported by AI functionality/AI feature 1 is used to configure the BWP3 with multiple models that implement the AI functionality/AI feature 1, which includes: Model 1-5 and Model 1-6, where Model 1-5 is the default model. The model configuration supported by AI functionality/AI feature 3 is used to configure the BWP3 with multiple models that implement the AI functionality/AI feature 1, which includes: Model 3-4, Model 3-5, and Model 3-6, where Model 3-4 is the default model.

The first configuration information for BWP4 includes the BWP4 configuration and the AI functionality/AI feature configuration. Here, the BWP4 configuration is used to configure the bandwidth of BWP4 as 100MHz and the SCS of BWP4 as 120 kHz. The AI feature configuration is used to indicate that BWP4 does not support the AI functionality/AI feature 1, the AI functionality/AI feature 2, and the AI functionality/AI feature 3.

Based on the first configuration information for the four BWPs shown in Table 1, it can be seen that for BWP1, since the bandwidth of BWP1 is the smallest among the four BWPs, the complexity requirement imposed on the AI model is the lowest. Since the subcarrier spacing of BWP1 is smaller, the duration corresponding to a time-domain symbol is longer (i.e., the duration available for model inference is longer), resulting in lower requirements on the model inference duration for the AI model. Accordingly, AI functionalities/features supported by BWP1 are also numerous, that is, the AI functionalities/features supported by BWP1 include the AI functionality/AI feature 1, the AI functionality/AI feature 2, and the AI functionality/AI feature 3.

For BWP2, since the bandwidth of BWP2 is larger than the bandwidth of BWP1, the complexity requirement imposed by BWP2 on the AI model is higher compared to the complexity requirement imposed by BWP1 on the AI model. Since the subcarrier spacing of BWP2 is the same as the subcarrier spacing of BWP1, the duration corresponding to the time-domain symbol in BWP2 is the same as that in BWP1 (i.e., durations available for model inference are the same). Accordingly, AI functionality/feature supported by BWP1 is more than AI functionality/feature supported by BWP2, that is, the AI functionality/feature supported by BWP2 include the AI functionality/AI feature 1 and the AI functionality/AI feature 2.

For BWP3, since the bandwidth of BWP3 is the same as the bandwidth of BWP2, the complexity requirements imposed by BWP3 and BWP2 on the AI model are similar. Since the subcarrier spacing of BWP3 is larger than the subcarrier spacing of BWP2, the duration corresponding to the time-domain symbol in BWP3 is shorter than the duration corresponding to the time-domain symbol in BWP2 (i.e., the duration available for model inference in BWP3 is reduced compared to the duration available for model inference in BWP2). Therefore, the requirement imposed by BWP3 on the model inference duration for the AI model is higher compared to the requirement imposed by BWP2 on the model inference duration for the AI model. Accordingly, the AI functionalities/AI features supported by BWP3 include the AI functionality/AI feature 1 and the AI functionality/AI feature 3.

For BWP4, since the bandwidth of BWP4 is the largest among the four BWPs, the complexity requirement imposed by BWP4 for the AI model is the highest. Since the subcarrier spacing of BWP4 is the same as the subcarrier spacing of BWP3, the duration corresponding to the time-domain symbol in BWP4 is shorter than the duration corresponding to the time-domain symbol in BWP2 (i.e., the duration available for model inference in BWP4 is reduced compared to the duration available for model inference in BWP2). Therefore, the requirement imposed by BWP4 on the model inference duration for the AI model is higher compared to the requirement imposed by BWP2 on the model inference duration for the AI model. Currently, none of the AI functionality/AI feature 1 to the AI functionality/AI feature 3 meets the related requirements of BWP4. Therefore, BWP4 does not support the AI functionality/AI feature 1 to the AI functionality/AI feature 3.

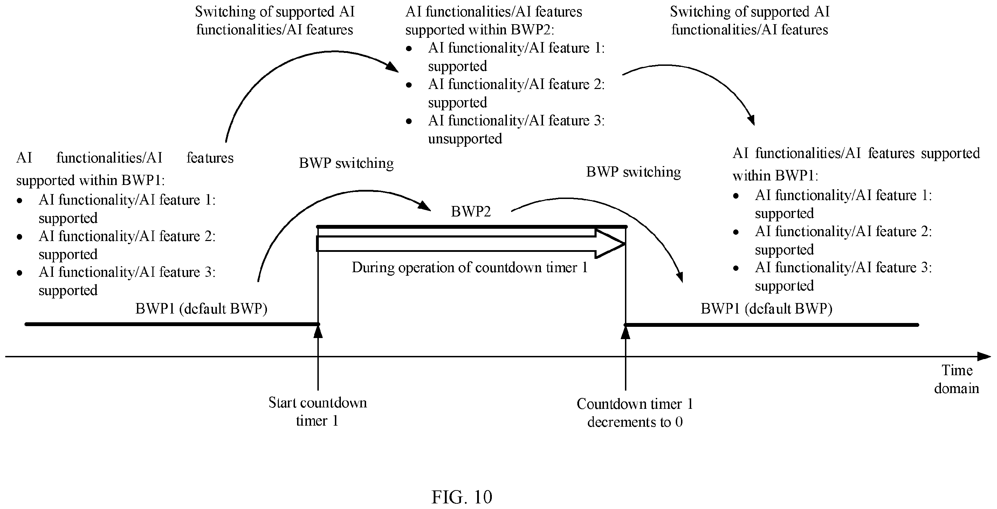

The above content introduced the first configuration information corresponding to BWP1 to BWP4 in the embodiments of the present application in combination with FIG. 9. The following content, using BWP1 to BWP4 as examples, and introduce the BWP switching process and the fallback process of the model in the embodiments of the present application in combination with FIGS. 10 to 14.

FIG. 10 is a schematic diagram of a BWP switching process from BWP1 to BWP2 according to the embodiments of the present application. As shown in FIG. 10, assume BWP1 is a default BWP. Accordingly, the terminal device communicates on BWP1 based on first configuration information for BWP1. The network device transmits indication information 1 to the terminal device to indicate to activate BWP2. Accordingly, in response to the indication information 1, the terminal device starts a countdown timer 1, and during operation of the countdown timer 1, the terminal device communicates based on the first configuration information corresponding to BWP2. That is, during the process of the terminal device switching from BWP1 to BWP2, the AI functionality/AI feature 3 changes from supported to unsupported, while other AI functionalities/AI features remain unchanged.

Accordingly, if the countdown timer 1 decrements to 0, the terminal device may switch from BWP2 to BWP1, and in response to the switching of BWP, the terminal device changes from the first configuration information corresponding to BWP2 to the first configuration information corresponding to BWP1 and communicates based on the first configuration information for BWP1. That is, during the process of the terminal device switching from BWP2 to BWP1, the AI functionality/AI feature 3 changes from unsupported to supported, while other AI functionalities/AI features remain unchanged.

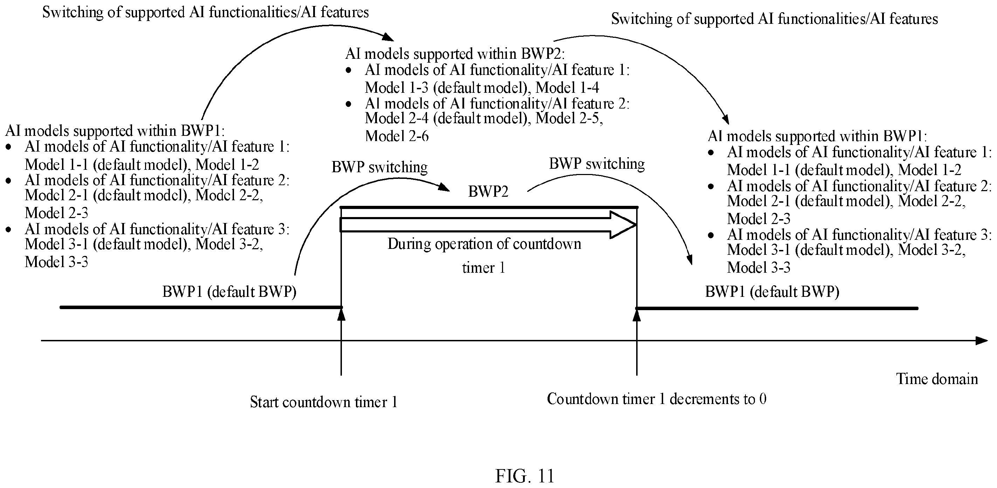

FIG. 11 is a schematic diagram of a BWP switching process from BWP1 to BWP2 according to another embodiment of the present application. As shown in FIG. 11, assume BWP1 is a default BWP. Accordingly, the terminal device communicates on BWP1 based on the first configuration information for BWP1. The network device transmits indication information 1 to the terminal device to indicate to activate BWP2. Accordingly, in response to the indication information 2, the terminal device starts a countdown timer 1, and during operation of the countdown timer 1, the terminal device communicates based on the first configuration information corresponding to BWP2. That is, during the process of the terminal device switching from BWP1 to BWP2, for the AI functionality/AI feature 1, the terminal device switches from Model 1-1 (i.e., the default model of BWP1) to Model 1-3 (i.e., the default model of BWP2). For the AI functionality/AI feature 2, the terminal device switches from Model 2-1 (i.e., the default model of BWP1) to Model 2-4 (i.e., the default model of BWP2). For the AI functionality/AI feature 3, the terminal device switches from Model 3-1 (i.e., the default model of BWP1) to not supporting the AI functionality/AI feature.

Accordingly, if the countdown timer 1 decrements to 0, the terminal device may switch from BWP2 to BWP1, and in response to the switching of BWP, the terminal device switches from the first configuration information corresponding to BWP2 to the first configuration information corresponding to BWP1 and communicates based on the first configuration information corresponding to BWP1. That is, during the process of the terminal device switching from BWP2 to BWP1, for the AI functionality/feature 1, the terminal device switches from Model 1-3 (i.e., the default model of BWP2) to Model 1-1 (i.e., the default model of BWP1). For the AI functionality/feature 2, the terminal device switches from Model 2-4 (i.e., the default model of BWP2) to model 2-1 (i.e., the default model of BWP1). For the AI functionality/feature 3, the terminal device switches from not supporting the AI functionality/AI feature to Model 3-1 (i.e., the default model of BWP1).

FIG. 12 is a schematic diagram of a BWP switching process from BWP2 to BWP1 according to another embodiment of the present application. As shown in FIG. 12, assume the network device transmits indication information 1 to the terminal device to indicate to activate BWP2. Accordingly, in response to the indication information 1, the terminal device starts a countdown timer 1, and during operation of the countdown timer 1, the terminal device communicates based on the first configuration information corresponding to BWP2. For the AI functionality/feature 1, the terminal device communicates based on model 1-3 (i.e., the default model of BWP2). Additionally, during operation of the countdown timer 1, the network device transmits indication information 2 to the terminal device to indicate to activate Model 1-4. Accordingly, in response to the indication information 2, the terminal device starts a countdown timer 2, and during operation of the countdown timer 2, the terminal device communicates on BWP2 based on Model 1-4. If the countdown timer 2 decrements to 0, the terminal device switches from Model 1-4 to Model 1-3 for communication on BWP2.

Accordingly, if the countdown timer 1 decrements to 0, the terminal device may switch from BWP2 to BWP1, and in response to the switching of BWP, the terminal device switches from the first configuration information corresponding to BWP2 to the first configuration information corresponding to BWP1 and communicates based on the first configuration information of BWP1. That is, during the process of the terminal device switching from BWP2 to BWP1, for the AI functionality/feature 1, the terminal device switches from Model 1-3 (i.e., the default model of BWP2) to Model 1-1 (i.e., the default model of BWP1).

FIG. 13 is a schematic diagram of a BWP switching process from BWP2 to BWP1 according to another embodiment of the present application. As shown in FIG. 13, assume the network device transmits indication information 1 to the terminal device to indicate to activate BWP2. Accordingly, in response to the indication information 1, the terminal device starts a countdown timer 1, and during operation of the countdown timer 1, the terminal device communicates based on the first configuration information corresponding to BWP2. For the AI functionality/feature 1, the terminal device communicates based on Model 1-3 (i.e., the default model of BWP2). Additionally, during operation of the countdown timer 1, the network device transmits indication information 2 to the terminal device to indicate to activate Model 1-4. Accordingly, in response to the indication information 2, the terminal device starts a countdown timer 2, and during operation of the countdown timer 2, the terminal device communicates on BWP2 based on Model 1-4. If the countdown timer 1 decrements to 0 before the countdown timer 2 decrements to 0, in response to the countdown timer 1 decrementing to 0, the terminal device switches from BWP2 to BWP1. Accordingly, the terminal device switches from the first configuration information corresponding to BWP2 to the first configuration information corresponding to BWP1, that is, the terminal device switches from Model 1-4 to Model 1-1 (i.e., the default model of BWP1).

With the widespread application of communication systems, various types of terminal devices have been introduced. For different types of terminal devices, their supported AI/ML-related capabilities may differ. Currently, network devices typically perform unified configuration at the granularity of BWPs. However, this unified configuration solution at the granularity of BWPs may render some terminal devices working within the BWP inapplicable, reducing the accuracy of the network device configuration.

Therefore, to address above issues, the embodiments of the present application further provide a method for transmitting capability information. In the method, the terminal device may transmit capability information associated with the first BWP to the network device, enabling the network device to perform AI/ML-related configurations (e.g., the aforementioned first configuration information) for the terminal device based on the capability information, thereby improving the accuracy of the network device configuration.

In some implementations, the capability information is used to indicate one or more of the following: a model supported by the terminal device and applicable to the first BWP; an AI functionality supported by the terminal device and applicable to the first BWP; an AI feature supported by the terminal device and applicable to the first BWP.

Taking the capability information indicating the model supported by the terminal device and applicable to the first BWP as an example, in some implementations, the capability information may carry model identifier(s) of one or more models, which helps reduce the overhead of transmitting the capability information. Certainly, in the embodiments of the present application, the capability information may directly carry the one or more models themselves.

In some implementations, the capability information is used to indicate one or more models supported by the terminal device, applicable to the first BWP and used to implement the first AI functionality. In other implementations, the capability information is used to indicate one or more models supported by the terminal device, applicable to the first BWP and used to implement the first AI feature.

In the embodiments of the present application, the manner in which the capability information indicates one or more models is not limited. For example, the capability information may carry model identifier(s) of one or more models, which helps reduce the overhead of transmitting the capability information. Certainly, in the embodiments of the present application, the capability information may directly carry the one or more models themselves.

In some implementations, the capability information is used to indicate a default model among the model supported by the terminal device and applicable to the first BWP, and the default model is activated in response the first BWP being activated. It should be understood that, for the default model, please may refer to the introduction in the previous content, which will not be repeated here for brevity. Certainly, in the embodiments of the present application, the capability information may also not indicate the default model.

Taking the capability information indicating the AI functionality supported by the terminal device and applicable to the first BWP as an example, or in other words, the capability information is used to indicate whether the terminal device supports AI-based processing for a certain functionality in the first BWP.

In some implementations, the AI functionality applicable to the first BWP includes one or more AI functionalities. For details about the AI functionality, please refer to the introduction in the previous content, which will not be repeated here for brevity.

In some implementations, the capability information includes AI feature identifier(s) of one or more AI features to reduce the overhead of transmitting capability information.

In some implementations, the capability information is used to indicate the default AI feature among the AI feature supported by the terminal device and applicable to the first BWP, where the default AI features is activated in response the first BWP being activated. It should be understood that, for the default AI feature, please refer to the introduction in the previous content, which will not be repeated here for brevity. Certainly, in the embodiments of the present application, the capability information may also not indicate the default AI feature.

Taking the capability information as an example to indicate the AI feature supported by the terminal device and applicable to the first BWP, or in other words, the capability information is used to indicate whether the terminal device supports AI-based processing for a certain feature in the first BWP.

In some implementations, the AI feature applicable to the first BWP includes one or more AI features. For the description of the AI feature, please refer to the introduction in the previous content, which will not be repeated here for brevity.

In some implementations, the capability information includes AI feature identifier(s) of one or more AI features to reduce the overhead of transmitting capability information.

In some implementations, the capability information is used to indicate the default AI feature among the AI feature supported by the terminal device and applicable to the first BWP, where the default AI feature is activated in response the first BWP being activated. It should be understood that, for the default AI feature, please refer to the introduction in the previous content, which will not be repeated here for brevity. Certainly, in the embodiments of the present application, the capability information may also not indicate the default AI feature.

It should be noted that in the embodiments of the present application, the capability information may also include identification information of the first BWP, so that the network device may determine which BWP the capability information is associated with. Certainly, in some scenarios, the capability information may not include the identification information of the first BWP.

For ease of understanding, the following content continues to introduce the four types of BWPs shown in FIG. 9 as examples. Accordingly, the respective capability information of the terminal device for each BWP can be seen in Table 2.

**Table 2**

| | | |
|---|---|---|
| | Information on the supported AI functionality/AI feature | AI functionality/AI feature 1: supported |
| | | AI functionality/AI feature 2: supported |
| | | AI functionality/AI feature 3: supported |
| | Information on the model supported by AI functionality/AI feature 1 | Model 1-1 (default model) |
| Capability information for BWP1 | | Model 1-2 |
| | Information on the model supported by AI functionality/AI feature 2 | Model 2-1 (default model) |
| | | Model 2-2 |
| | | Model 2-3 |
| | Information on the model supported by AI functionality/AI feature 3 | Model 3-1 (default model) |
| | | Model 3-2 |
| | | Model 3-3 |
| Capability information for BWP2 | Information on the supported AI functionality/AI feature | AI functionality/AI feature 1: supported |
| | | AI functionality/AI feature 2: supported |
| | | AI functionality/AI feature 3: unsupported |
| | Information on the model supported by AI functionality/AI feature 1 | Model 1-3 (default model) |
| | | Model 1-4 |
| | Information on a model supported by AI functionality/AI feature 2 | Model 2-4 (default model) |
| | | Model 2-5 |
| | | Model 2-6 |
| Capability information for BWP3 | Information on the supported AI functionality/AI feature | AI functionality/AI feature 1: supported |
| | | AI functionality/AI feature 2: unsupported |
| | | AI functionality/AI feature 3: unsupported |
| | Information on the model supported by AI functionality/AI feature 1 | Model 1-5 (default model) Model 1-6 |
| | Information on a model supported by AI functionality/AI feature 3 | Model 3-4 (default model) |
| | | Model 3-5 |
| | | Model 3-6 |
| Capability information for BWP4 | Information on the supported AI functionality/AI feature | AI functionality/AI feature 1: supported |
| | | AI functionality/AI feature 2: unsupported |
| | | AI functionality/AI feature 3: unsupported |

As shown in Table 2, the capability information for BWP1 includes the information on the supported AI functionality/AI feature, the information on the model supported by AI functionality/AI feature 1, the model supported by AI functionality/AI feature 2, and the model supported by AI functionality/AI feature 3. Here, the information on the supported AI functionality/AI feature is used to indicate that the AI functionality/AI feature supported by the terminal device on BWP1 includes: the AI functionality/AI feature 1, the AI functionality/AI feature 2, and the AI functionality/AI feature 3. The information on the model supported by AI functionality/AI feature 1 is used to indicate that multiple models for implementing the AI functionality/AI feature 1 that are supported by the terminal device on BWP1 include: Model 1-1 and Model 1-2, where Model 1-1 is the default model. The information on the model supported by AI functionality/AI feature 2 indicates that multiple models for implementing the AI functionality/AI feature 2 that are supported by the terminal device on BWP1 include: Model 2-1, Model 2-2, and Model 2-3, where Model 2-1 is the default model. The information on the model supported by AI functionality/AI feature 3 is used to indicate that multiple models for implementing the AI functionality/AI feature 3 that are supported by the terminal device on BWP1 include: Model 3-1, Model 3-2, and Model 3-3, where Model 3-1 is the default model.

The capability information for BWP2 includes the information on the supported AI functionality/AI feature, the information on the model supported by AI functionality/AI feature 1, and the model supported by AI functionality/AI feature 2. Here, the information on the supported AI functionality/AI feature is used to indicate that the terminal device supports the AI functionality/AI feature 1 and the AI functionality/AI feature 2 on BWP2, but does not support the AI functionality/AI feature 3. The information on the model supported by AI functionality/AI feature 1 is used to indicate that multiple models for implementing the AI functionality/AI feature 1 that are supported by the terminal device on BWP2 include: Model 1-3 and Model 1-4, where Model 1-3 is the default model. The information on the model supported by AI functionality/AI feature 2 is used to indicate that multiple models for implementing the AI functionality/AI feature 2 that are supported by the terminal device on BWP2 include: Model 2-4, Model 2-5, and Model 2-6, where Model 2-4 is the default model.

The capability information for BWP3 includes the information on the supported AI functionality/AI feature, the information on the model supported by AI functionality/AI feature 1, and the information on the model supported by AI functionality/AI feature 3. Here, the information on the supported AI functionality/AI feature is used to indicate that the terminal device supports the AI functionality/AI feature 1 and the AI functionality/AI feature 3 on BWP3, but does not support the AI functionality/AI feature 2. The model configuration for the AI functionality/AI feature 1 is used to configure BWP3 with multiple models that implement the AI functionality/AI feature 1: Model 1-5 and Model 1-6, where Model 1-5 is the default model. The model configuration for the AI functionality/AI feature 3 is used to configure BWP3 with multiple models that implement the AI functionality/AI feature 1: Model 3-4, Model 3-5, and Model 3-6, where Model 3-4 is the default model.

The capability information for BWP4 includes the information on the supported AI functionality/AI feature. Here, the information on the supported AI functionality/AI feature is used to indicate that the terminal device does not support the AI functionality/AI feature 1, the AI functionality/AI feature 2, and the AI functionality/AI feature 3 on BWP4.

Based on the capability information for the four BWPs shown in Table 2, it can be seen that for BWP1, since the bandwidth of BWP1 is the smallest among the four BWPs, the complexity requirement imposed on the AI model is the lowest. Since BWP1 has a smaller subcarrier spacing, the duration corresponding to the time-domain symbol is longer (i.e., the duration available for model inference is relatively longer), resulting in lower requirements on the model inference duration for the AI model. Accordingly, the AI capability/feature supported by the terminal device on BWP1 is relatively extensive, that is, the AI functionality/feature supported by BWP1 includes the AI functionality/feature 1, the AI functionality/feature 2, and the AI functionality/feature 3.

For BWP2, since the bandwidth of BWP2 is larger than the bandwidth of BWP1, the complexity requirement imposed by BWP2 on the AI model is higher compared to the complexity requirement imposed by BWP1 on the AI model. Since the subcarrier spacing of BWP2 is the same as the subcarrier spacing of BWP1, duration corresponding to the time-domain symbol in BWP2 is the same as that in BWP1 (i.e., the durations available for model inference are the same). Accordingly, the AI functionality/feature supported by the terminal device on BWP1 is more than the AI functionality/feature supported by the terminal device on BWP2, that is, the AI functionality/feature supported by the terminal device on BWP2 includes the AI functionality/feature 1 and the AI functionality/feature 2.

For BWP3, since the bandwidth of BWP3 is the same as the bandwidth of BWP2, the complexity requirements imposed by BWP3 and BWP2 on the AI model are similar. Since the subcarrier spacing of BWP3 is larger than the subcarrier spacing of BWP2, the duration corresponding to the time-domain symbol in BWP3 is shorter than the duration corresponding to the time-domain symbol in BWP2 (i.e., the duration available for model inference in BWP3 is reduced compared to the duration available for model inference in BWP2). Therefore, the requirement imposed by BWP3 on the model inference duration for the AI model is higher compared to the requirement imposed by BWP2 on the model inference duration for the AI model. Accordingly, the AI capability/feature supported by the terminal device on BWP3 includes the AI functionality/feature 1 and the AI functionality/feature 3.

For BWP4, since the bandwidth of BWP4 is the largest among the four BWPs, the complexity requirement imposed by BWP4 for the AI model is the highest. Since the subcarrier spacing of BWP4 is the same as the subcarrier spacing of BWP3, the duration corresponding to the time-domain symbol in BWP4 is shorter than the duration corresponding to the time-domain symbol in BWP2 (i.e., the duration available for model inference in BWP4 is reduced compared to the duration available for model inference in BWP2). Therefore, the requirement imposed by BWP4 on the model inference duration for the AI model is higher compared to the requirement imposed by BWP2 on the model inference duration for the AI model. Currently, the terminal device does not support the AI functionality/feature 1 to the AI functionality/feature 3 on BWP4.

In the embodiments of the present application, the capability information mentioned above may be carried by one or more of the following message types: an NR positioning protocol A (NRPPa) message, a long term evolution positioning protocol (LPP) message, a non-access stratum (NAS) message, a radio resource control (RRC) message, a media access control control element (MAC CE), downlink control information (DCI), uplink control information (UCI), a physical uplink control channel (PUCCH), a physical uplink shared channel (PUSCH), an inter-node message, an Xn interface message, an F1 interface message, an E1 interface message, an NG interface message, a core network service-based architecture message, or an AI-specific message.

In the embodiments of the present application, the capability information mentioned above may be carried by one or more of: a unicast message, a multicast message, or a broadcast message.

The unicast message can be understood as one-to-one transmitted information, that is, a message transmitted from one transmitting end to one receiving end. In this case, the source transmits the unicast message via a unicast channel, and only terminal devices or network devices allocated with corresponding unicast resources can attempt to receive the unicast message. The unicast message may also be referred to as dedicated signaling.

The multicast message can be understood as one-to-multiple transmitted information, that is, a message transmitted from one transmitting end to multiple receiving ends. In this case, the source transmits the multicast message via a multicast channel, and terminal devices or network devices within the multicast signal coverage and belonging to the group member may attempt to receive the multicast message. The terminal device or network device obtains multicast channel-related resources when joining a group.

The broadcast message can be understood as one-to-any transmitted information, that is, a message transmitted from one transmitting end to any receiving end. In this case, the source transmits the broadcast message via a broadcast channel, and any terminal devices or network devices within the broadcast signal coverage may attempt to receive the broadcast message.

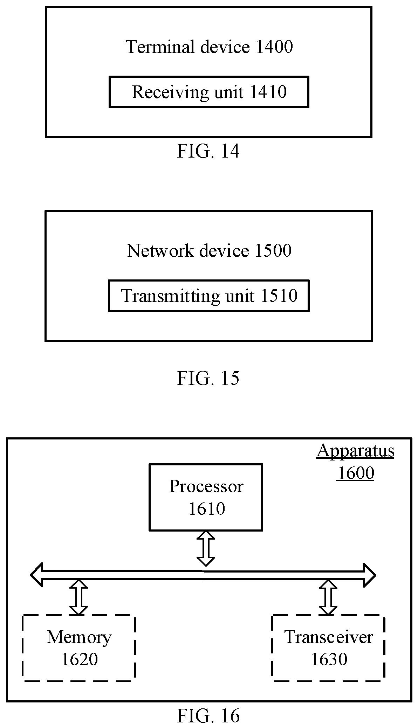

The above content, in combination with FIGS. 1 to 13, has provided a detailed description of the method embodiments of the present application. The following content, in combination with FIGS. 14 to 16, will describe the apparatus embodiments of the present application in detail. It should be understood that the description of the method embodiments corresponds to the description of the apparatus embodiments. Therefore, for parts not described in detail, reference may be made to the previous method embodiments.

FIG. 14 is a schematic diagram of a terminal device of the embodiments of the present application. The terminal device 1400 shown in FIG. 14 includes: a receiving unit 1410.

The receiving unit 1410 is configured to receive first configuration information transmitted by a network device, where the first configuration information is used to configure one or more of the following for a first bandwidth part (BWP): a first model; a first artificial intelligence (AI) functionality; or a first AI feature.

In some implementations, the first configuration information is used to configure one or more models for implementing the first AI functionality, and the one or more models include the first model.

In some implementations, the first configuration information includes model identifier(s) of the one or more models.

In some implementations, the first configuration information is used to indicate a first default model among the one or more models, and the first default model is activated in response to the first BWP being activated.

In some implementations, the first configuration information is used to indicate the first default model among the models, and the receiving unit is further configured to receive first indication information transmitted by the network device, where the first indication information is used to indicate to activate other models among the models excluding the first default model.

In some implementations, the terminal device further includes a first processing unit, and the first processing unit is configured to: in response to receiving the first indication information, start a first timer; and during operation of the first timer, communicate with the network device based on the other models.

In some implementations, the first processing unit is configured to: in response to expiration of the first timer, communicate with the network device based on the first default model.

In some implementations, the first configuration information is used to indicate one or more AI functionalities supported by the first BWP, and the one or more AI functionalities include the first AI functionality.

In some implementations, the first configuration information includes AI functionality identifier(s) of the one or more AI functionalities.

In some implementations, the first configuration information is used to indicate a first default AI functionality among the one or more AI functionalities, and the first default AI functionality is activated in response to the first BWP being activated.

In some implementations, the first configuration information is used to indicate the first default AI functionality among the AI functionalities, and the receiving unit is further configured to: receive second indication information transmitted by the network device, where the second indication information is used to indicate to activate other AI functionalities among the AI functionalities excluding a first default AI functionality.

In some implementations, the terminal device further includes a second processing unit, and the second processing unit is configured to: in response to receiving the second indication information, start a second timer; and during operation of the second timer, communicate with the network device based on the other AI functionalities.

In some implementations, the second processing unit is configured to: in response to expiration of the second timer, communicate with the network device based on the first default AI functionality.

In some implementations, the first configuration information is used to indicate one or more AI features supported by the first BWP, where the one or more AI features include the first AI feature.

In some implementations, the first configuration information includes AI feature identifier(s) of the one or more AI features.

In some implementations, the first configuration information is used to indicate a first default AI feature among the one or more AI features, and the first default AI feature is activated in response to the first BWP being activated.

In some implementations, the first configuration information is used to indicate the first default AI functionality among the AI functionalities, and the receiving unit is further configured to: receive third indication information transmitted by the network device, where the third indication information is used to indicate to activate other AI features among the AI features excluding a first default AI feature.

In some implementations, the terminal device further includes a third processing unit, and the third processing unit is configured to: in response to receiving the third indication information, start a third timer; and during operation of the third timer, communicate with the network device based on the other AI features.

In some implementations, the third processing unit is configured to: in response to expiration of the third timer, communicate with the network device based on the first default AI feature.

In some implementations, the terminal device further includes a fourth processing unit, and the fourth processing unit is further configured to: in response to activating the first BWP, communicate with the network device based on the first configuration information.

In some implementations, the activating the first BWP includes: switching, by the terminal device, from a second BWP to the first BWP, where the second BWP is different from the first BWP.

In some implementations, the fourth processing unit is further configured to: in response to activating the first BWP, start a fourth timer; and during operation of the fourth timer, communicate with the network device based on the first configuration information.

In some implementations, the fourth processing unit is further configured to: in response to expiration of the fourth timer, communicate with the network device based on second configuration information, where the second configuration information is used to configure one or more of the following for a third BWP: a second model; a second AI functionality; or second AI feature.

In some implementations, the third BWP is a default BWP.

In some implementations, the communicating, by the terminal device, with the network device based on the second configuration information includes one of: communicating, by the terminal device, with the network device based on a default model in the third BWP configured by the second configuration information; communicating, by the terminal device, with the network device based on a default AI functionality in the third BWP configured by the second configuration information; or communicating, by the terminal device, with the network device based on a default AI feature in the third BWP configured by the second configuration information.

In some implementations, the first configuration information includes one or more of: the first configuration information includes one or more of: a frequency domain location of the first BWP; a frequency bandwidth of the first BWP; or numerology of the first BWP.

In some implementations, the terminal device further includes a transmitting unit, and the transmitting unit is configured to transmit capability information to the network device, where the capability information is used to indicate one or more of: a model supported by the terminal device and applicable to the first BWP; an AI functionality supported by the terminal device and applicable to the first BWP; or an AI feature supported by the terminal device and applicable to the first BWP.

In some implementations, the capability information is used to indicate the model supported by the terminal device and applicable to the first BWP, and the capability information is used to indicate one or more models supported by the terminal device, applicable to the first BWP and used to implement the first AI functionality.

In some implementations, the capability information is used to indicate the model supported by the terminal device and applicable to the first BWP, and the capability information includes a model identifier of the model supported by the terminal device and applicable to the first BWP.

In some implementations, the capability information is used to indicate a default model among the model supported by the terminal device and applicable to the first BWP, and the default model is activated in response to the first BWP being activated.

In some implementations, the capability information is used to indicate the AI functionality supported by the terminal device and applicable to the first BWP, where the AI functionality applicable to the first BWP includes one or more AI functionalities.

In some implementations, the capability information includes AI functionality identifier(s) of the one or more AI functionalities.

In some implementations, the capability information is used to indicate a default AI functionality among the AI functionality supported by the terminal device and applicable to the first BWP, and the default AI functionality is activated in response to the first BWP being activated.

In some implementations, the capability information is used to indicate the AI feature supported by the terminal device and applicable to the first BWP, and the AI feature applicable to the first BWP includes one or more AI features.

In some implementations, the capability information includes AI feature identifier(s) of the one or more AI features.

In some implementations, the capability information is used to indicate a default AI feature among the AI feature supported by the terminal device and applicable to the first BWP, and the default AI functionality is activated in response to the first BWP being activated.

FIG. 15 is a schematic diagram of a network device of the embodiments of the present application. The network device 1500 shown in FIG. 15 includes: a transmitting unit 1510.

The transmitting unit 1510 is configured to transmit first configuration information to a terminal device, where the first configuration information is used to configure one or more of the following for a first bandwidth part (BWP): a first model; a first artificial intelligence (AI) functionality; or a first AI feature.

In some implementations, the first configuration information is used to configure one or more models for implementing the first AI functionality, and the one or more models include the first model.

In some implementations, the first configuration information includes model identifier(s) of the one or more models.

In some implementations, the first configuration information is used to indicate a first default model among the one or more models, and the first default model is activated in response to the first BWP being activated.

In some implementations, the first configuration information is used to indicate the first default model among the models, and the transmitting unit is configured to: transmit first indication information to the terminal device, where the first indication information is used to indicate to activate other models among the models excluding the first default model.

In some implementations, the network device further includes a first processing unit, and the first processing unit is configured to: in response to transmitting the first indication information, start a first timer; and during operation of the first timer, communicate with the terminal device based on the other models.

In some implementations, the first processing unit is configured to: in response to expiration of the first timer, communicate with the terminal device based on the first default model.

In some implementations, the first configuration information is used to indicate one or more AI functionalities supported by the first BWP, and the one or more AI functionalities include the first AI functionality.

In some implementations, the first configuration information includes AI functionality identifier(s) of the one or more AI functionalities.

In some implementations, the first configuration information is used to indicate a first default AI functionality among the one or more AI functionalities, and the first default AI functionality is activated in response to the first BWP being activated.

In some implementations, the first configuration information is used to indicate a first default AI functionality among the AI functionalities, and the transmitting unit is configured to transmit second indication information to the terminal device, where the second indication information is used to indicate to activate other AI functionalities among the AI functionalities excluding the first default AI functionality.

In some implementations, the network device further includes a second processing unit, and the second processing unit is configured to: in response to transmitting the second indication information, start a second timer; and during operation of the second timer, communicate with the terminal device based on the other AI functionalities.

In some implementations, the second processing unit is configured to: in response to expiration of the second timer, communicate with the terminal device based on the first default AI functionality.

In some implementations, the first configuration information is used to indicate one or more AI features supported by the first BWP, and the one or more AI features include the first AI feature.

In some implementations, the first configuration information includes AI feature identifier(s) of the one or more AI features.

In some implementations, the first configuration information is used to indicate a first default AI feature among the one or more AI features, and the first default AI feature is activated in response to the first BWP being activated.

In some implementations, the first configuration information is used to indicate a first default AI feature among the AI features, and the transmitting unit is further configured to: transmit third indication information to the terminal device, where the third indication information is used to indicate to activate other AI features among the AI features excluding the first default AI feature.

In some implementations, the network device further includes a third processing unit, and the third processing unit is configured to: in response to transmitting the third indication information, start a third timer; and during operation of the third timer, communicate with the terminal device based on the other AI features.

In some implementations, the third processing unit is configured to: in response to expiration of the third timer, communicate with the terminal device based on the first default AI feature.

In some implementations, the network device further includes a fourth processing unit, and the fourth processing unit is configured to: in response to activating the first BWP, communicate with the terminal device based on the first configuration information.

In some implementations, the activating the first BWP includes: switching, by the terminal device, from a second BWP to the first BWP, where the second BWP is different from the first BWP.

In some implementations, the fourth processing unit is configured to: in response to activating the first BWP, start a fourth timer; and during operation of the fourth timer, communicate with the terminal device based on the first configuration information.

In some implementations, the fourth processing unit is configured to: in response to expiration of the fourth timer, communicate with the terminal device based on second configuration information, where the second configuration information is used to configure one or more of the following for a third BWP: a second model; a second AI functionality; or a second AI feature.

In some implementations, the third BWP is a default BWP.

In some implementations, communicating, by the network device, with the terminal device based on the second configuration information includes one of: communicating, by the network device, with the terminal device based on a default model in the third BWP configured by the second configuration information; communicating, by the network device, with the terminal device based on a default AI functionality in the third BWP configured by the second configuration information; or communicating, by the network device, with the terminal device based on a default AI feature in the third BWP configured by the second configuration information.

In some implementations, the first configuration information includes one or more of: a frequency domain location of the first BWP; a frequency bandwidth of the first BWP; or numerology of the first BWP.

In some implementations, the network device further includes: a receiving unit, configured to receive capability information transmitted by the terminal device, where the capability information is used to indicate one or more of: a model supported by the terminal device and applicable to the first BWP; an AI functionality supported by the terminal device and applicable to the first BWP; or an AI feature supported by the terminal device and applicable to the first BWP.

In some implementations, the capability information is used to indicate the model supported by the terminal device and applicable to the first BWP, and the capability information is used to indicate one or more models supported by the terminal device, applicable to the first BWP and used to implement the first AI functionality.

In some implementations, the capability information is used to indicate the model supported by the terminal device and applicable to the first BWP, and the capability information includes a model identifier of the model supported by the terminal device and applicable to the first BWP.

In some implementations, the capability information is used to indicate a default model among the model supported by the terminal device and applicable to the first BWP, and the default model is activated in response to the first BWP being activated.

In some implementations, the capability information is used to indicate the AI functionality supported by the terminal device and applicable to the first BWP, and the AI functionality applicable to the first BWP includes one or more AI functionalities.

In some implementations, the capability information includes AI functionality identifier(s) of the one or more AI functionalities.

In some implementations, the capability information is used to indicate a default AI functionality among the AI functionality supported by the terminal device and applicable to the first BWP, and the default AI functionality is activated in response to the first BWP being activated.

In some implementations, the capability information is used to indicate the AI feature supported by the terminal device and applicable to the first BWP, and the AI feature applicable to the first BWP includes one or more AI features.

In some implementations, the capability information includes AI feature identifier(s) of the one or more AI features.

In some implementations, the capability information is used to indicate a default AI feature among the AI feature supported by the terminal device and applicable to the first BWP, and the default AI functionality is activated in response to the first BWP being activated.

In an optional embodiment, the receiving unit 1410 may be a transceiver 1630. The terminal device 1400 may further include a processor 1610 and a memory 1620, as specifically shown in FIG. 16.

In an optional embodiment, the transmitting unit 1510 may be a transceiver 1630. The network device 1500 may further include a processor 1610 and a memory 1620, as specifically shown in FIG. 16.

FIG. 16 is a schematic structural diagram of a communication apparatus of the embodiments of the present application. The dashed lines in FIG. 16 indicate that the unit or module is optional. The apparatus 1600 may be configured to implement the method described in the previous method embodiments. The apparatus 1600 may be a chip, a terminal device, or a network device.

The apparatus 1600 may include one or more processors 1610. The processor 1610 may support the apparatus 1600 in implementing the method described in the previous method embodiments. The processor 1610 may be a general-purpose processor or a dedicated processor. For example, the processor may be a central processing unit (CPU). Alternatively, the processor may also be another general-purpose processor, a digital signal processor (DSP), an application-specific integrated circuit (ASIC), a field-programmable gate array (FPGA), or other programmable logic devices, discrete gate or transistor logic devices, discrete hardware components, etc. The general-purpose processor may be a microprocessor, or the processor may also be any conventional processor, etc.

The apparatus 1600 may further include one or more memories 1620. The memory 1620 stores a program thereon, which may be executed by the processor 1610, enabling the processor 1610 to perform the method described in the previous method embodiments. The memory 1620 may be independent of the processor 1610 or integrated within the processor 1610.

The apparatus 1600 may further include a transceiver 1630. The processor 1610 may communicate with other devices or chips via the transceiver 1630. For example, the processor 1610 may transmit data to and receive data from other devices or chips via the transceiver 1630.

The embodiments of the present application further provide a computer-readable storage medium for storing a program. The computer-readable storage medium may be applied to the terminal or network device provided by the embodiments of the present application, and the program enables a computer to perform the methods performed by the terminal or network device in the various embodiments of the present application.

The embodiments of the present application further provide a computer program product. The computer program product includes a program. The computer program product may be applied to the terminal or network device provided by the embodiments of the present application, and the program enables a computer to perform the methods performed by the terminal or network device in the various embodiments of the present application.

The embodiments of the present application further provide a computer program. The computer program may be applied to the terminal or network device provided in the embodiments of the present application, and the computer program enables the computer to perform the methods performed by the terminals or network devices in the various embodiments of the present application.

It should be understood that the terms "system" and "network" in the present application may be used interchangeably. Additionally, the terms used in the present application are only intended to explain specific embodiments of the present application and are not meant to limit the present application. In the specification and claims of the present application, as well as the accompanying drawings, terms such as "first," "second," "third," and "fourth" are used to distinguish between different objects and not to describe a specific order. Furthermore, the terms "include" and "have" and any variations thereof are intended to cover non-exclusive inclusion.

In the embodiments of the present application, the term "indicate/indicated/indicating/indication" may refer to a direct indication, an indirect indication, or may represent that there is an association relationship. As an example, if A indicates B, it may mean that A directly indicates B, for example, B can be acquired through A; or it may mean that A indicates B indirectly, for example, A indicates C, and B can be acquired through C; or it may mean that there is an association relationship between A and B.

In the embodiments of the present application, "B corresponding to A" means that B is associated with A, and B can be determined based on A. However, it should also be understood that determining B based on A does not mean that B is determined solely based on A; B may also be determined based on A and/or other information.

In the embodiments of the present application, the term "correspond/corresponding/correspondence" may mean that there is a direct correspondence or an indirect correspondence between two elements, or may mean that there is an association relationship between the two elements, or may mean a relationship such as indicating and being indicated, or configuring and being configured.

In the embodiments of the present application, "predefined" or "preconfigured" may be implemented by pre-storing corresponding codes, tables, or other means that can indicate relevant information in devices (e.g., including terminal devices and network devices). The present application does not limit the specific implementation method. For example, predefined may refer to what is defined in the protocol.

In the embodiments of the present application, the "protocol" may refer to standard protocols in the field of communications, such as an LTE protocol, an NR protocol, and related protocols applied in future communication systems, which are not limited in the present application.

In the embodiments of the present application, the term "and/or" herein describes an association relationship between associated objects, which indicates that there may be three kinds of relationships. For example, "A and/or B" may indicate three cases where: A exists alone, both A and B exist, and B exists alone. Additionally, a character "/" herein generally indicates that the associated objects before and after this character are in an "or" relationship.

In various embodiments of the present application, the numerical order of the above processes does not imply an order of execution. The execution order of the each process should be determined by its function and internal logic, but should not constitute any limitation on the implementation processes of the embodiments of the present application.

In the several embodiments provided by the present application, it should be understood that the disclosed system, apparatus, and method may be implemented in other ways. For example, the apparatus embodiments described above are merely illustrative. For instance, the division of units is only a logical functional division, and in actual implementation, there may be other division manners. For example, multiple units or components may be combined or integrated into another system, or some features may be omitted or not executed. Additionally, the displayed or discussed mutual couplings or direct couplings or communication connections may be indirect couplings or communication connections through some interfaces, apparatuses, or units, which may be electrical, mechanical, or of other forms.

The units described as separate components may or may not be physically separated. The components displayed as units may or may not be physical units, meaning that they may be located in one place or distributed across multiple network units. Depending on actual needs, some or all of the units may be selected to achieve the objectives of the embodiments.

Additionally, in various embodiments of the present application, each functional unit may be integrated into one processing unit, or each unit may exist physically alone, or two or more units may be integrated into one unit.

The above embodiments may be implemented in whole or in part by software, hardware, firmware, or any combination thereof. When the above embodiments are implemented by using software, they may be implemented in the form of a computer program product in whole or in part. The computer program product includes one or more computer instructions. When the computer program instructions are loaded and executed on a computer, procedures or functions according to the embodiments of the present application are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (e.g., coaxial cable, optical fiber, digital subscriber line (DSL)) or wireless (e.g., infrared, radio, microwave) means. The computer-readable storage medium may be any available medium accessible to the computer, or a data storage device, such as a server or a data center that integrates one or more available media. The available medium may be a magnetic medium (e.g., a floppy disk, a hard disk, a magnetic tape), an optical medium (e.g., a digital video disc (DVD)), or a semiconductor medium (e.g., a solid state drive (SSD)), etc.

The above descriptions are merely specific implementations of the present application. However, the protection scope of the present application is not limited thereto. Any change or substitution that would be readily conceived by a person skilled in the art shall fall within the protection scope of the present application, provided that such change or substitution remains within the technical scope disclosed in the present application. Therefore, the protection scope of the present application should be subject to the protection scope of the claims.

## Claims

1. A method for transmitting configuration information, comprising:
receiving, by a terminal device, first configuration information transmitted by a network device, wherein the first configuration information is used to configure one or more of the following for a first bandwidth part (BWP):
a first model;
a first artificial intelligence (AI) functionality; or
a first AI feature.

2. The method according to claim 1, wherein the first configuration information is used to configure the first model for the first BWP, the first configuration information is used to configure one or more models for implementing the first AI functionality, and the one or more models comprise the first model.

3. The method according to claim 2, wherein the first configuration information comprises model identifier(s) of the one or more models.

4. The method according to claim 2 or 3, wherein the first configuration information is used to indicate a first default model among the one or more models, and the first default model is activated in response to the first BWP being activated.

5. The method according to claim 4, further comprising:
receiving, by the terminal device, first indication information transmitted by the network device, wherein the first indication information is used to indicate to activate other models among the models excluding the first default model.

6. The method according to claim 5, further comprising:
in response to receiving the first indication information, starting, by the terminal device, a first timer; and
during operation of the first timer, communicating, by the terminal device, with the network device based on the other models.

7. The method according to claim 6, further comprising:
in response to expiration of the first timer, communicating, by the terminal device, with the network device based on the first default model.

8. The method according to any one of claims 1 to 7, wherein the first configuration information is used to configure the first AI functionality for the first BWP, the first configuration information is used to indicate one or more AI functionalities supported by the first BWP, and the one or more AI functionalities comprise the first AI functionality.

9. The method according to claim 8, wherein the first configuration information comprises AI functionality identifier(s) of the one or more AI functionalities.

10. The method according to claim 8 or 9, wherein the first configuration information is used to indicate a first default AI functionality among the one or more AI functionalities, and the first default AI functionality is activated in response to the first BWP being activated.

11. The method according to any one of claims 8 to 10, further comprising:
receiving, by the terminal device, second indication information transmitted by the network device, wherein the second indication information is used to indicate to activate other AI functionalities among the AI functionalities excluding a first default AI functionality.

12. The method according to claim 11, further comprising:
in response to receiving the second indication information, starting, by the terminal device, a second timer; and
during operation of the second timer, communicating, by the terminal device, with the network device based on the other AI functionalities.

13. The method according to claim 12, further comprising:
in response to expiration of the second timer, communicating, by the terminal device, with the network device based on the first default AI functionality.

14. The method according to any one of claims 1 to 13, wherein the first configuration information is used to configure the first AI feature for the first BWP, the first configuration information is used to indicate one or more AI features supported by the first BWP, and the one or more AI features comprise the first AI feature.

15. The method according to claim 14, wherein the first configuration information comprises AI feature identifier(s) of the one or more AI features.

16. The method according to claim 13 or 14, wherein the first configuration information is used to indicate a first default AI feature among the one or more AI features, and the first default AI feature is activated in response to the first BWP being activated.

17. The method according to any one of claims 14 to 16, further comprising:
receiving, by the terminal device, third indication information transmitted by the network device, wherein the third indication information is used to indicate to activate other AI features among the AI features excluding a first default AI feature.

18. The method according to claim 17, further comprising:
in response to receiving the third indication information, starting, by the terminal device, a third timer; and
during operation of the third timer, communicating, by the terminal device, with the network device based on the other AI features.

19. The method according to claim 18, further comprising:
in response to expiration of the third timer, communicating, by the terminal device, with the network device based on the first default AI feature.

20. The method according to any one of claims 1 to 19, further comprising:
in response to activating the first BWP, communicating, by the terminal device, with the network device based on the first configuration information.

21. The method according to claim 20, wherein the activating the first BWP comprises: switching, by the terminal device, from a second BWP to the first BWP, wherein the second BWP is different from the first BWP.

22. The method according to claim 20 or 21, further comprising:
in response to activating the first BWP, starting, by the terminal device, a fourth timer; and
during operation of the fourth timer, communicating, by the terminal device, with the network device based on the first configuration information.

23. The method according to claim 22, further comprising:
in response to expiration of the fourth timer, communicating, by the terminal device, with the network device based on second configuration information, wherein the second configuration information is used to configure one or more of the following for a third BWP: a second model, a second AI functionality, or a second AI feature.

24. The method according to claim 23, wherein the third BWP is a default BWP.

25. The method according to claim 23 or 24, wherein the communicating, by the terminal device, with the network device based on the second configuration information comprises one of:
communicating, by the terminal device, with the network device based on a default model in the third BWP configured by the second configuration information;
communicating, by the terminal device, with the network device based on a default AI functionality in the third BWP configured by the second configuration information; or
communicating, by the terminal device, with the network device based on a default AI feature in the third BWP configured by the second configuration information.

26. The method according to any one of claims 1 to 25, wherein the first configuration information comprises one or more of: the first configuration information comprises one or more of: a frequency domain location of the first BWP, a frequency bandwidth of the first BWP, or numerology of the first BWP.

27. The method according to any one of claims 1 to 26, further comprising:
transmitting, by the terminal device, capability information to the network device, wherein the capability information is used to indicate one or more of:
a model supported by the terminal device and applicable to the first BWP;
an AI functionality supported by the terminal device and applicable to the first BWP; or
an AI feature supported by the terminal device and applicable to the first BWP.

28. The method according to claim 27, wherein the capability information is used to indicate the model supported by the terminal device and applicable to the first BWP, and the capability information is used to indicate one or more models supported by the terminal device, applicable to the first BWP and used to implement the first AI functionality.

29. The method according to claim 27 or 28, wherein the capability information is used to indicate the model supported by the terminal device and applicable to the first BWP, and the capability information comprises a model identifier of the model supported by the terminal device and applicable to the first BWP.

30. The method according to claim 28 or 29, wherein the capability information is used to indicate a default model among the model supported by the terminal device and applicable to the first BWP, and the default model is activated in response to the first BWP being activated.

31. The method according to any one of claims 27 to 30, wherein the capability information is used to indicate the AI functionality supported by the terminal device and applicable to the first BWP, and the AI functionality applicable to the first BWP comprises one or more AI functionalities.

32. The method according to claim 31, wherein the capability information comprises AI functionality identifier(s) of the one or more AI functionalities.

33. The method according to claim 31 or 32, wherein the capability information is used to indicate a default AI functionality among the AI functionality supported by the terminal device and applicable to the first BWP, and the default AI functionality is activated in response to the first BWP being activated.

34. The method according to any one of claims 27 to 33, wherein the capability information is used to indicate the AI feature supported by the terminal device and applicable to the first BWP, and the AI feature applicable to the first BWP comprises one or more AI features.

35. The method according to claim 34, wherein the capability information comprises AI feature identifier(s) of the one or more AI features.

36. The method according to claim 34 or 35, wherein the capability information is used to indicate a default AI feature among the AI feature supported by the terminal device and applicable to the first BWP, and the default AI functionality is activated in response to the first BWP being activated.

37. A method for transmitting configuration information, comprising:
transmitting, by a network device, first configuration information to a terminal device, wherein the first configuration information is used to configure one or more of the following for a first bandwidth part (BWP):
a first model;
a first artificial intelligence (AI) functionality; or
a first AI feature.

38. The method according to claim 37, wherein the first configuration information is used to configure one or more models for implementing the first AI functionality, and the one or more models comprise the first model.

39. The method according to claim 38, wherein the first configuration information comprises model identifier(s) of the one or more models.

40. The method according to claim 38 or 39, wherein the first configuration information is used to indicate a first default model among the one or more models, and the first default model is activated in response to the first BWP being activated.

41. The method according to claim 40, wherein the first configuration information is used to indicate the first default model among the models, and the method further comprises:
transmitting, by the network device, first indication information to the terminal device, wherein the first indication information is used to indicate to activate other models among the models excluding the first default model.

42. The method according to claim 41, further comprising:
in response to transmitting the first indication information, starting, by the network device, a first timer; and
during operation of the first timer, communicating, by the network device, with the terminal device based on the other models.

43. The method according to claim 42, further comprising:
in response to expiration of the first timer, communicating, by the network device, with the terminal device based on the first default model.

44. The method according to any one of claims 37 to 43, wherein the first configuration information is used to indicate one or more AI functionalities supported by the first BWP, and the one or more AI functionalities comprise the first AI functionality.

45. The method according to claim 44, wherein the first configuration information comprises AI functionality identifier(s) of the one or more AI functionalities.

46. The method according to claim 44 or 45, wherein the first configuration information is used to indicate a first default AI functionality among the one or more AI functionalities, and the first default AI functionality is activated in response to the first BWP being activated.

47. The method according to any one of claims 44 to 46, wherein the first configuration information is used to indicate a first default AI functionality among the AI functionalities, and the method further comprises:
transmitting, by the network device, second indication information to the terminal device, wherein the second indication information is used to indicate to activate other AI functionalities among the AI functionalities excluding the first default AI functionality.

48. The method according to claim 47, further comprising:
in response to transmitting the second indication information, starting, by the network device, a second timer; and
during operation of the second timer, communicating, by the network device, with the terminal device based on the other AI functionalities.

49. The method according to claim 48, further comprising:
in response to expiration of the second timer, communicating, by the network device, with the terminal device based on the first default AI functionality.

50. The method according to any one of claims 37 to 49, wherein the first configuration information is used to indicate one or more AI features supported by the first BWP, and the one or more AI features comprise the first AI feature.

51. The method according to claim 50, wherein the first configuration information comprises AI feature identifier(s) of the one or more AI features.

52. The method according to claim 49 or 50, wherein the first configuration information is used to indicate a first default AI feature among the one or more AI features, and the first default AI feature is activated in response to the first BWP being activated.

53. The method according to any one of claims 50 to 52, wherein the first configuration information is used to indicate a first default AI feature among the AI features, and the method further comprises:
transmitting, by the network device, third indication information to the terminal device, wherein the third indication information is used to indicate to activate other AI features among the AI features excluding the first default AI feature.

54. The method according to claim 53, further comprising:
in response to transmitting the third indication information, starting, by the network device, a third timer; and
during operation of the third timer, communicating, by the network device, with the terminal device based on the other AI features.

55. The method according to claim 54, further comprising:
in response to expiration of the third timer, communicating, by the network device, with the terminal device based on the first default AI feature.

56. The method according to any one of claims 37 to 55, further comprising:
in response to activating the first BWP, communicating, by the network device, with the terminal device based on the first configuration information.

57. The method according to claim 56, wherein the activating the first BWP comprises: switching, by the terminal device, from a second BWP to the first BWP, wherein the second BWP is different from the first BWP.

58. The method according to claim 56 or 57, further comprising:
in response to activating the first BWP, starting, by the network device, a fourth timer; and
during operation of the fourth timer, communicating, by the network device, with the terminal device based on the first configuration information.

59. The method according to claim 58, further comprising:
in response to expiration of the fourth timer, communicating, by the network device, with the terminal device based on second configuration information, wherein the second configuration information is used to configure one or more of the following for a third BWP: a second model, a second AI functionality, or a second AI feature.

60. The method according to claim 59, wherein the third BWP is a default BWP.

61. The method according to claim 59 or 60, wherein the communicating, by the network device, with the terminal device based on the second configuration information comprises one of:
communicating, by the network device, with the terminal device based on a default model in the third BWP configured by the second configuration information;
communicating, by the network device, with the terminal device based on a default AI functionality in the third BWP configured by the second configuration information; or
communicating, by the network device, with the terminal device based on a default AI feature in the third BWP configured by the second configuration information.

62. The method according to any one of claims 37 to 61, wherein the first configuration information comprises one or more of: the first configuration information comprises one or more of: a frequency domain location of the first BWP, a frequency bandwidth of the first BWP, or numerology of the first BWP.

63. The method according to any one of claims 37 to 62, further comprising:
receiving, by the network device, capability information transmitted by the terminal device, wherein the capability information is used to indicate one or more of:
a model supported by the terminal device and applicable to the first BWP;
an AI functionality supported by the terminal device and applicable to the first BWP; or
an AI feature supported by the terminal device and applicable to the first BWP.

64. The method according to claim 63, wherein the capability information is used to indicate the model supported by the terminal device and applicable to the first BWP, and the capability information is used to indicate one or more models supported by the terminal device, applicable to the first BWP and used to implement the first AI functionality.

65. The method according to claim 63 or 64, wherein the capability information is used to indicate the model supported by the terminal device and applicable to the first BWP, and the capability information comprises a model identifier of the model supported by the terminal device and applicable to the first BWP.

66. The method according to claim 64 or 65, wherein the capability information is used to indicate a default model among the model supported by the terminal device and applicable to the first BWP, and the default model is activated in response to the first BWP being activated.

67. The method according to any one of claims 63 to 66, wherein the capability information is used to indicate the AI functionality supported by the terminal device and applicable to the first BWP, and the AI functionality applicable to the first BWP comprises one or more AI functionalities.

68. The method according to claim 67, wherein the capability information comprises AI functionality identifier(s) of the one or more AI functionalities.

69. The method according to claim 67 or 68, wherein the capability information is used to indicate a default AI functionality among the AI functionality supported by the terminal device and applicable to the first BWP, and the default AI functionality is activated in response to the first BWP being activated.

70. The method according to any one of claims 63 to 69, wherein the capability information is used to indicate the AI feature supported by the terminal device and applicable to the first BWP, and the AI feature applicable to the first BWP comprises one or more AI features.

71. The method according to claim 70, wherein the capability information comprises AI feature identifier(s) of the one or more AI features.

72. The method according to claim 70 or 71, wherein the capability information is used to indicate a default AI feature among the AI feature supported by the terminal device and applicable to the first BWP, and the default AI functionality is activated in response to the first BWP being activated.

73. A terminal device, comprising:
a receiving unit, configured to receive first configuration information transmitted by a network device, wherein the first configuration information is used to configure one or more of the following for a first bandwidth part (BWP):
a first model;
a first artificial intelligence (AI) functionality; or
a first AI feature.

74. The terminal device according to claim 73, wherein the first configuration information is used to configure one or more models for implementing the first AI functionality, and the one or more models comprise the first model.

75. The terminal device according to claim 74, wherein the first configuration information comprises model identifier(s) of the one or more models.

76. The terminal device according to claim 74 or 75, wherein the first configuration information is used to indicate a first default model among the one or more models, and the first default model is activated in response to the first BWP being activated.

77. The terminal device according to claim 76, wherein the first configuration information is used to indicate the first default model among the models, and
the receiving unit is further configured to receive first indication information transmitted by the network device, wherein the first indication information is used to indicate to activate other models among the models excluding the first default model.

78. The terminal device according to claim 77, wherein the terminal device further comprises a first processing unit, and the first processing unit is configured to:
in response to receiving the first indication information, start a first timer; and
during operation of the first timer, communicate with the network device based on the other models.

79. The terminal device according to claim 78, wherein the first processing unit is configured to:
in response to expiration of the first timer, communicate with the network device based on the first default model.

80. The terminal device according to any one of claims 73 to 79, wherein the first configuration information is used to indicate one or more AI functionalities supported by the first BWP, and the one or more AI functionalities comprise the first AI functionality.

81. The terminal device according to claim 80, wherein the first configuration information comprises AI functionality identifier(s) of the one or more AI functionalities.

82. The terminal device according to claim 80 or 81, wherein the first configuration information is used to indicate a first default AI functionality among the one or more AI functionalities, and the first default AI functionality is activated in response to the first BWP being activated.

83. The terminal device according to any one of claims 80 to 82, wherein the first configuration information is used to indicate a first default AI functionality among the AI functionalities, and the receiving unit is further configured to:
receive second indication information transmitted by the network device, wherein the second indication information is used to indicate to activate other AI functionalities among the AI functionalities excluding the first default AI functionality.

84. The terminal device according to claim 83, wherein the terminal device further comprises a second processing unit, and the second processing unit is configured to:
in response to receiving the second indication information, start a second timer; and
during operation of the second timer, communicate with the network device based on the other AI functionalities.

85. The terminal device according to claim 84, wherein the second processing unit is configured to:
in response to expiration of the second timer, communicate with the network device based on the first default AI functionality.

86. The terminal device according to any one of claims 73 to 85, wherein the first configuration information is used to indicate one or more AI features supported by the first BWP, and the one or more AI features comprise the first AI feature.

87. The terminal device according to claim 86, wherein the first configuration information comprises AI feature identifier(s) of the one or more AI features.

88. The terminal device according to claim 85 or 86, wherein the first configuration information is used to indicate a first default AI feature among the one or more AI features, and the first default AI feature is activated in response to the first BWP being activated.

89. The terminal device according to any one of claims 86 to 88, wherein the first configuration information is used to indicate a first default AI functionality among the AI functionalities, and the receiving unit is further configured to:
receive third indication information transmitted by the network device, wherein the third indication information is used to indicate to activate other AI features among the AI features excluding a first default AI feature.

90. The terminal device according to claim 89, wherein the terminal device further comprises a third processing unit, and the third processing unit is configured to:
in response to receiving the third indication information, start a third timer; and
during operation of the third timer, communicate with the network device based on the other AI features.

91. The terminal device according to claim 90, wherein the third processing unit is configured to:
in response to expiration of the third timer, communicate with the network device based on the first default AI feature.

92. The terminal device according to any one of claims 73 to 91, wherein the terminal device further comprises a fourth processing unit, and the fourth processing unit is configured to:
in response to activating the first BWP, communicate with the network device based on the first configuration information.

93. The terminal device according to claim 92, wherein the activating the first BWP comprises: switching, by the terminal device, from a second BWP to the first BWP, wherein the second BWP is different from the first BWP.

94. The terminal device according to claim 92 or 93, wherein the fourth processing unit is further configured to:
in response to activating the first BWP, start a fourth timer; and
during operation of the fourth timer, communicate with the network device based on the first configuration information.

95. The terminal device according to claim 94, wherein the fourth processing unit is further configured to:
in response to expiration of the fourth timer, communicate with the network device based on second configuration information, wherein the second configuration information is used to configure one or more of the following for a third BWP: a second model, a second AI functionality, or a second AI feature.

96. The terminal device according to claim 95, wherein the third BWP is a default BWP.

97. The terminal device according to claim 95 or 96, wherein the communicating, by the terminal device, with the network device based on the second configuration information comprises one of:
communicating, by the terminal device, with the network device based on a default model in the third BWP configured by the second configuration information;
communicating, by the terminal device, with the network device based on a default AI functionality in the third BWP configured by the second configuration information; or
communicating, by the terminal device, with the network device based on a default AI feature in the third BWP configured by the second configuration information.

98. The terminal device according to any one of claims 73 to 97, wherein the first configuration information comprises one or more of: the first configuration information comprises one or more of: a frequency domain location of the first BWP, a frequency bandwidth of the first BWP, or numerology of the first BWP.

99. The terminal device according to any one of claims 73 to 98, wherein the terminal device further comprises a transmitting unit, and the transmitting unit is configured to transmit capability information to the network device, wherein the capability information is used to indicate one or more of:
a model supported by the terminal device and applicable to the first BWP;
an AI functionality supported by the terminal device and applicable to the first BWP; or
an AI feature supported by the terminal device and applicable to the first BWP.

100. The terminal device according to claim 99, wherein the capability information is used to indicate the model supported by the terminal device and applicable to the first BWP, and the capability information is used to indicate one or more models supported by the terminal device, applicable to the first BWP and used to implement the first AI functionality.

101. The terminal device according to claim 99 or 100, wherein the capability information is used to indicate the model supported by the terminal device and applicable to the first BWP, and the capability information comprises a model identifier of the model supported by the terminal device and applicable to the first BWP.

102. The terminal device according to claim 100 or 101, wherein the capability information is used to indicate a default model among the model supported by the terminal device and applicable to the first BWP, and the default model is activated in response to the first BWP being activated.

103. The terminal device according to any one of claims 100 to 102, wherein the capability information is used to indicate the AI functionality supported by the terminal device and applicable to the first BWP, and the AI functionality applicable to the first BWP comprises one or more AI functionalities.

104. The terminal device according to claim 103, wherein the capability information comprises AI functionality identifier(s) of the one or more AI functionalities.

105. The terminal device according to claim 103 or 104, wherein the capability information is used to indicate a default AI functionality among the AI functionality supported by the terminal device and applicable to the first BWP, and the default AI functionality is activated in response to the first BWP being activated.

106. The terminal device according to any one of claims 100 to 105, wherein the capability information is used to indicate the AI feature supported by the terminal device and applicable to the first BWP, and the AI feature applicable to the first BWP comprises one or more AI features.

107. The terminal device according to claim 106, wherein the capability information comprises AI feature identifier(s) of the one or more AI features.

108. The terminal device according to claim 106 or 107, wherein the capability information is used to indicate a default AI feature among the AI feature supported by the terminal device and applicable to the first BWP, and the default AI functionality is activated in response to the first BWP being activated.

109. A network device, comprising:
a transmitting unit, configured to transmit first configuration information to a terminal device, wherein the first configuration information is used to configure one or more of the following for a first bandwidth part (BWP):
a first model;
a first artificial intelligence (AI) functionality; or
a first AI feature.

110. The network device according to claim 109, wherein the first configuration information is used to configure one or more models for implementing the first AI functionality, and the one or more models comprise the first model.

111. The network device according to claim 110, wherein the first configuration information comprises model identifier(s) of the one or more models.

112. The network device according to claim 110 or 111, wherein the first configuration information is used to indicate a first default model among the one or more models, and the first default model is activated in response to the first BWP being activated.

113. The network device according to claim 112, wherein the first configuration information is used to indicate the first default model among the models, and the transmitting unit is configured to:
transmit first indication information to the terminal device, wherein the first indication information is used to indicate to activate other models among the models excluding the first default model.

114. The network device according to claim 113, wherein the network device further comprises a first processing unit, and the first processing unit is configured to:
in response to transmitting the first indication information, start a first timer; and
during operation of the first timer, communicate with the terminal device based on the other models.

115. The network device according to claim 114, wherein the first processing unit is configured to:
in response to expiration of the first timer, communicate with the terminal device based on the first default model.

116. The network device according to any one of claims 109 to 115, wherein the first configuration information is used to indicate one or more AI functionalities supported by the first BWP, and the one or more AI functionalities comprise the first AI functionality.

117. The network device according to claim 116, wherein the first configuration information comprises AI functionality identifier(s) of the one or more AI functionalities.

118. The network device according to claim 116 or 117, wherein the first configuration information is used to indicate a first default AI functionality among the one or more AI functionalities, and the first default AI functionality is activated in response to the first BWP being activated.

119. The network device according to any one of claims 116 to 118, wherein the first configuration information is used to indicate a first default AI functionality among the AI functionalities, and the transmitting unit is configured to:
transmit second indication information to the terminal device, wherein the second indication information is used to indicate to activate other AI functionalities among the AI functionalities excluding the first default AI functionality.

120. The network device according to claim 119, wherein the network device further comprises a second processing unit, and the second processing unit is configured to:
in response to transmitting the second indication information, start a second timer; and
during operation of the second timer, communicate with the terminal device based on the other AI functionalities.

121. The network device according to claim 120, wherein the second processing unit is configured to:
in response to expiration of the second timer, communicate with the terminal device based on the first default AI functionality.

122. The network device according to any one of claims 109 to 121, wherein the first configuration information is used to indicate one or more AI features supported by the first BWP, and the one or more AI features comprise the first AI feature.

123. The network device according to claim 122, wherein the first configuration information comprises AI feature identifier(s) of the one or more AI features.

124. The network device according to claim 121 or 122, wherein the first configuration information is used to indicate a first default AI feature among the one or more AI features, and the first default AI feature is activated in response to the first BWP being activated.

125. The network device according to any one of claims 122 to 124, wherein the first configuration information is used to indicate a first default AI feature among the AI features, and the transmitting unit is further configured to:
transmit third indication information to the terminal device, wherein the third indication information is used to indicate to activate other AI features among the AI features excluding the first default AI feature.

126. The network device according to claim 125, wherein the network device further comprises a third processing unit, and the third processing unit is configured to:
in response to transmitting the third indication information, start a third timer; and
during operation of the third timer, communicate with the terminal device based on the other AI features.

127. The network device according to claim 126, wherein the third processing unit is configured to:
in response to expiration of the third timer, communicate with the terminal device based on the first default AI feature.

128. The network device according to any one of claims 109 to 127, wherein the network device further comprises a fourth processing unit, and the fourth processing unit is configured to:
in response to activating the first BWP, communicate with the terminal device based on the first configuration information.

129. The network device according to claim 128, wherein the activating the first BWP comprises: switching, by the terminal device, from a second BWP to the first BWP, wherein the second BWP is different from the first BWP.

130. The network device according to claim 128 or 129, wherein the fourth processing unit is configured to:
in response to activating the first BWP, start a fourth timer; and
during operation of the fourth timer, communicate with the terminal device based on the first configuration information.

131. The network device according to claim 130, wherein the fourth processing unit is configured to:
in response to expiration of the fourth timer, communicate with the terminal device based on second configuration information, wherein the second configuration information is used to configure one or more of the following for a third BWP: a second model, a second AI functionality, or a second AI feature.

132. The network device according to claim 131, wherein the third BWP is a default BWP.

133. The network device according to claim 131 or 132, wherein the communicating, by the network device, with the terminal device based on the second configuration information comprises one of:
communicating, by the network device, with the terminal device based on a default model in the third BWP configured by the second configuration information;
communicating, by the network device, with the terminal device based on a default AI functionality in the third BWP configured by the second configuration information; or
communicating, by the network device, with the terminal device based on a default AI feature in the third BWP configured by the second configuration information.

134. The network device according to any one of claims 109 to 133, wherein the first configuration information comprises one or more of: the first configuration information comprises one or more of: a frequency domain location of the first BWP, a frequency bandwidth of the first BWP, or numerology of the first BWP.

135. The network device according to any one of claims 109 to 134, wherein the network device further comprises:
a receiving unit, configured to receive capability information transmitted by the terminal device, wherein the capability information is used to indicate one or more of:
a model supported by the terminal device and applicable to the first BWP;
an AI functionality supported by the terminal device and applicable to the first BWP; or
an AI feature supported by the terminal device and applicable to the first BWP.

136. The network device according to claim 135, wherein the capability information is used to indicate the model supported by the terminal device and applicable to the first BWP, and the capability information is used to indicate one or more models supported by the terminal device, applicable to the first BWP and used to implement the first AI functionality.

137. The network device according to claim 135 or 136, wherein the capability information is used to indicate the model supported by the terminal device and applicable to the first BWP, and the capability information comprises a model identifier of the model supported by the terminal device and applicable to the first BWP.

138. The network device according to claim 136 or 137, wherein the capability information is used to indicate a default model among the model supported by the terminal device and applicable to the first BWP, and the default model is activated in response to the first BWP being activated.

139. The network device according to any one of claims 135 to 138, wherein the capability information is used to indicate the AI functionality supported by the terminal device and applicable to the first BWP, and the AI functionality applicable to the first BWP comprises one or more AI functionalities.

140. The network device according to claim 139, wherein the capability information comprises AI functionality identifier(s) of the one or more AI functionalities.

141. The network device according to claim 139 or 140, wherein the capability information is used to indicate a default AI functionality among the AI functionality supported by the terminal device and applicable to the first BWP, and the default AI functionality is activated in response to the first BWP being activated.

142. The network device according to any one of claims 135 to 141, wherein the capability information is used to indicate the AI feature supported by the terminal device and applicable to the first BWP, and the AI feature applicable to the first BWP comprises one or more AI features.

143. The network device according to claim 142, wherein the capability information comprises AI feature identifier(s) of the one or more AI features.

144. The network device according to claim 142 or 143, wherein the capability information is used to indicate a default AI feature among the AI feature supported by the terminal device and applicable to the first BWP, and the default AI functionality is activated in response to the first BWP being activated.

145. A terminal device, comprising a transceiver, a memory, and a processor, wherein the memory is configured to store a program, the processor is configured to invoke the program in the memory and control the transceiver to receive or transmit signals, to enable the terminal device to perform the method according to any one of claims 1 to 36.

146. A network device, comprising a transceiver, a memory, and a processor, wherein the memory is configured to store a program, the processor is configured to invoke the program in the memory and control the transceiver to receive or transmit signals, to enable the network device to perform the method according to any one of claims 37 to 72.

147. An apparatus, comprising a processor, configured to invoke a program from a memory, to enable the apparatus to perform the method according to any one of claims 1 to 72.

148. A chip, comprising a processor, configured to invoke a program from a memory, to enable a device equipped with the chip to perform the method according to any one of claims 1 to 72.

149. A computer-readable storage medium, configured to store a program, wherein the program enables a computer to perform the method according to any one of claims 1 to 72.

150. A computer program product, comprising a program, wherein the program enables a computer to perform the method according to any one of claims 1 to 72.

151. A computer program, wherein the computer program enables a computer to perform the method according to any one of claims 1 to 72.
